(19) Europäisches Patentamt
European Patent Office
Office européen des brevets

(11) **EP 4 535 285 A2**

(12) **EUROPÄISCHE PATENTANMELDUNG**

(43) Veröffentlichungstag:
09.04.2025   Patentblatt 2025/15

(21) Anmeldenummer: 24203654.9

(22) Anmeldetag: 30.09.2024

(51) Internationale Patentklassifikation (IPC):
**G06T 7/38** (2017.01)       **G06T 7/564** (2017.01)

(52) Gemeinsame Patentklassifikation (CPC):
**G06T 7/33;** G06T 7/564; G06T 2207/10028;
G06T 2207/10081; G06T 2207/10132;
G06T 2207/20084

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität:  02.10.2023   DE 102023126842

(71) Anmelder: **mattiaspaul GmbH**
**23627 Groß Sarau (DE)**

(72) Erfinder:
• **HEINRICH, Mattias**
  **23627 Groß Sarau (DE)**
• **HANSEN, Lasse**
  **23564 Lübeck (DE)**
• **LICHTENSTEIN, Jürgen**
  **6137 LN Sittard (NL)**
• **BIGALKE, Alexander**
  **23564 Lübeck (DE)**

(74) Vertreter: **Horn Kleimann Waitzhofer Schmid-Dreyer**
**Patent- und Rechtsanwälte PartG mbB**
**Theresienhöhe 12**
**80339 München (DE)**

(54) **VERFAHREN, VORRICHTUNG UND SYSTEM ZUM REGISTRIEREN MEHRERER MEDIZINISCHER 2D-EINZELSCHNITTBILDER IN EINEM GEMEINSAMEN 3D-KOORDINATENSYSTEM**

(57)    Verfahren zum Registrieren medizinischer 2D-Einzelschnittbilder in einem gemeinsamen 3D-Koordinatensystem mit: Aufnehmen einer Bildsequenz aus mehreren 2D-Einzelschnittbildern eines Körperabschnitts eines Patienten mit einer bildgebenden Vorrichtung; für jedes der mehreren 2D-Einzelschnittbilder: Bestimmen einer Anzahl 2D-Konturen in dem 2D-Einzelschnittbild, Bestimmen einer dünn besetzten Punktwolke mit mehreren Oberflächenpunkten auf jeder der 2D-Konturen, und Positionieren und Orientieren der Punktwolke in dem 3D-Koordinatensystem anhand einer Position und Orientierung des 2D-Einzelschnittbilds; und Registrieren einer ersten der Punktwolken an einer zweiten der Punktwolken durch Bestimmen einer räumlichen Transformation, welche die erste Punktwolke dergestalt in die zweite Punktwolke überführt, dass eine Fehlanpassung zwischen der gemäß der Transformation transformierten ersten Punktwolke und der zweiten Punktwolke möglichst gering ist, durch Minimieren einer Verlustfunktion, die eine Abweichung zwischen zwei durch Rasterisieren der betreffenden Punktwolken erlangten, mit Helligkeitswerten dicht besetzten 3D-Volumina angibt.

FIG. 8

EP 4 535 285 A2

**Beschreibung**

Die vorliegende Erfindung betrifft das Gebiet der medizinischen Bildrekonstruktion und im Speziellen ein Verfahren, eine Vorrichtung und ein System zum Registrieren mehrerer medizinischer 2D-Einzelschnittbilder in einem gemeinsamen 3D-Koordinatensystem.

In der Medizintechnik sind unterschiedliche bildgebende Vorrichtungen bekannt, die ein oder mehrere Sequenzen von 2D-Einzelschnittbildern eines Patienten liefern, wie CT-Scanner, Ultraschallsonden und dergleichen. Diese bildgebenden Vorrichtungen werden von Hand oder automatisiert entlang einer vorgegebenen Trajektorie an einem Körper oder Körperabschnitt des Patienten entlanggeführt, und aus einer Abfolge von aufgenommenen 2D-Einzelschnittbildern kann eine 3D-Darstellung eines Inneren des Patientenkörpers rekonstruiert werden.

Es ist bekannt, mittels semantischem Labeling die Konturen von anatomischen Strukturen in den aufgenommenen 2D-Einzelschnittbildern zu identifizieren und Punktwolken aus Oberflächenpunkten auf den identifizierten Konturen zu bilden. Auf diese Weise werden wichtige von unwichtigen Informationen getrennt. Entsprechend lassen sich aus den mehreren Punktwolken 3D-Darstellungen eines Inneren des Patientenkörpers rekonstruieren, anhand derer viele medizinische Sachverhalte klarer hervortreten.

Hierbei stellt sich das Problem, dass eine relative räumliche Position und Orientierung der einzelnen 2D-Einzelschnittbilder einer Sequenz zueinander, und damit auch eine räumliche Position und Orientierung der einzelnen Punktwolken zueinander, nicht genau bekannt ist, weil die Trajektorie, entlang welcher die bildgebende Vorrichtung geführt wurde, nicht hinreichend genau bekannt ist.

Weiterhin besteht der Wunsch, in unterschiedlichen Bildsequenzen gewonnene Punktwolken dergestalt räumlich in Beziehung zueinander zu setzen, dass korrespondierende anatomische Merkmale oder Strukturen aneinander ausgerichtet werden, um z.B. die Bewegungen innerer Organe wie atmender Lungen oder schlagender Herzen exakt erfassen und visualisieren zu können.

Die US 11 580 328 B1 offenbart Systeme und Verfahren für das semantische Labeling von Punktwolken unter der Verwendung von Bildern.

Die WO 2020 / 216 752 A1 offenbart ein Verfahren, bei dem eine Ultraschallsonde eine Reihe zweidimensionaler Ultraschallbilder einer Region of Interest in einem Patienten erfasst, ohne die räumliche Position der Sonde zu verfolgen; eine Pose für jedes der 2D-Ultraschallbilder der ROI in dem Patienten in Bezug auf ein standardisiertes dreidimensionales Koordinatensystem vorhersagt, indem sie die 2D-Ultraschallbilder einem neuronalen Faltungsnetzwerk zuführt, das anhand mehrerer zuvor erfasster 2D-Ultraschallbilder entsprechender ROIs in mehreren anderen Patienten trainiert ist, welche unter Verfolgung der räumlichen Position einer Sonde erfasst wurden; und die vorhergesagte Pose für jedes der 2D-Ultraschallbilder der ROI in dem Patienten in Bezug auf das standardisierte 3D-Koordinatensystem nutzt, um ein 3D-Ultraschallbild der ROI aus der Reihe 2D-Ultraschallbilder der ROI zu produzieren. Das Verfahren arbeitet mit den rohen Ultraschallbildern, ist somit anfällig für Ungenauigkeiten, die durch nicht relevante Informationen in den 2D-Ultraschallbildern eingeführt werden, und ist nicht zur Anwendung auf Punktwolken variabler Mächtigkeit und dergleichen geeignet.

Die DE 10 2020 119 954 A1 offenbart ein Verfahren zum Erzeugen einer Belegungsgitterkarte für zumindest ein statisches Element in einer mittels Ultraschalls vermessenen Umgebung eines Kraftfahrzeugs.

Die EP 3 522 789 B1 offenbart ein Verfahren zum Bestimmen einer dreidimensionalen Bewegung einer beweglichen Ultraschallsonde während der Erfassung eines Ultraschallbildes eines Volumenabschnitts durch die Ultraschallsonde, wobei Modul für maschinelles Lernen anhand der Ultraschallbildrahmen und weiterer Sensordaten, die mindestens eines von Positionsdaten, Beschleunigungsdaten und Gyroskopdaten in Bezug auf die Ultraschallsonde umfassen, einen dreidimensionalen Bewegungsindikator bestimmt, der die relative dreidimensionale Bewegung zwischen den Ultraschallbildrahmen angibt.

Die US 2012 / 0 143 049 A1 offenbart ein bildgeführtes Operationssystem, umfassend ein chirurgisches Instrument, ein Verfolgungssystem zum Orten und Verfolgen eines Objekts in einer chirurgischen Umgebung, wobei das Verfolgungssystem ein Verfolgungssensorsystem, insbesondere ein Verfolgungskamerasystem aufweist, und ein medizinisches Navigationssystem, das Verfolgungsdaten von dem Verfolgungssystem und Bilddaten des Objekts verarbeitet und Bilddaten und eine Navigationsassistenz auf einer Anzeige ausgibt.

Nichtpatentliteratur 1, Mescheder, et al.: Occupancy networks: Learning 3d reconstruction in function space. In Proceedings of the IEEE/CVF conference on computer vision and pattern recognition, Seiten 4460-4470, 2019, behandelt ein Verfahren zur 3D-Rekonstruktion, das auf maschinellem Lernen beruht und Occupancy-Gitter zusammen mit neuronalen Netzwerken verwendet.

Nichtpatentliteratur 2, Baum et al: Real- time multimodal image registration with partial intraoperative point-set data. Medical image analysis, 74:102231, 2021. 5, offenbart eine DNN-Architektur für die deformierbare Registrierung von Punktmengen am Beispiel von MR-TRUS Prostatavolumina.

Nichtpatentliteratur 3, Shen et al.: Accurate point cloud registration with robust optimal transport. Advances in Neural Information Processing Systems, 34:5373-5389, 2021 behandelt die Registrierung von Punktwolken aneinander durch numerische Optimierung oder Deep-Learning unter Rückgriff auf Optimal-Transport-Löser. Das Verfahren ist äußerst rechenintensiv.

Nichtpatentliteratur 4, Cuturi: Sinkhorn distances: Lightspeed computation of optimal transport. Advances in neural information processing systems, 26, 2013 schlägt zur Steigerung der Recheneffizienz vor, das klassische Problem des optimalen Transports mit einem entropischen Regularisierungsterm zu glätten, und zeigt, dass das resultierende Optimum eine Distanz ist, die mittels Sinkorn's Matrixskalierungsalgorithmus deutlich schneller berechnet werden kann.

Nichtpatentliteratur 5, Wenxuan Wu et al.: "Pointpwc-net: Cost volume on point clouds for (self-) supervised scene flow estimation" in Computer Vision-ECCV 2020: 16th European Conference, Glasgow, UK, August 23-28, 2020, Proceedings, Part V 16, pages 88-107, Springer, 2020 offenbart ein neuronales Netzwerk zur Punktwolkenregistrierung namens PointPWC-Net.

Nichtpatentliteratur 6, Yue Wang et al.: "Dynamic graph cnn for learning on point clouds", Acm Transactions ON Graphics (tog), 38/(5):1-12, 2019 offenbart ein DGCNN zur allgemeinen Anwendung bei Punktwolken.

Nichtpatentliteratur 7, Siebert, H., Hansen, L., Heinrich, M.P. (2022). Fast 3D Registration with Accurate Optimisation and Little Learning for Learn2Reg 2021. In: Aubreville, M., Zimmerer, D., Heinrich, M. (eds) Biomedical Image Registration, Domain Generalisation and Out-of-Distribution Analysis. MICCAI 2021. Lecture Notes in Computer Science, vol 13166. Springer, Cham. offenbart ein Verfahren zur 3D-Bildregistrierung anhand von dicht besetzten volumetrischen Multilabel-Segmentierungen. Das Verfahren eignet sich nicht für die Registrierung von Punktwolken aneinander. Detailliertere Strukturen, wie z.B. Gefäße, können mit diesem Verfahren nicht gut aufeinander abgebildet werden, und das Verfahren ist sehr rechen- und speicherintensiv.

Nichtpatentliteratur 8, Pujol-Miro, Alba; Ruiz-Hidalgo, Javir; Cassas, Josep R. Registration of images to unorganized 3D point clouds using contour cues. In: 25th European Signal Processing Conference: EUSIPCO 2017, 28. August- 2. September 2017, Insel Kos, Griechenland. Piscataway: IEEE, 2017. S. 81-85. ISBN 978-0-9928626-7-1 offenbart ein Verfahren zum Registrieren mehrerer zweidimensionaler, 2D, Einzelschnittbilder in einem gemeinsamen dreidimensionalen, 3D, Koordinatensystem mit Bestimmen einer Anzahl 2D-Konturen jeweiliger geometrischer Strukturen in einem jeweiligen 2D-Einzelschnittbild und Bestimmen einer dünn besetzten Punktwolke mit mehreren Oberflächenpunkten auf jeder der Anzahl 2D-Konturen.

Nichtpatentliteratur 9, Bojanić, Davi et al. Challenging the universal representation of deep models for 3D point cloud registration. 29.11.2022, S. 1-15, offenbart ein einfaches Verfahren zur 3D-Registrierung, das auf einer schrittweisen Gittersuche über die möglichen Rotationen und Translationen beruht.

Es besteht Bedarf an einer weiteren Verbesserung des verbleibenden Registrierungsfehlers der bekannten Methoden sowie einer weiteren Steigerung der Effizienz bezüglich Rechenintensität und Speicherbedarf.

Vor diesem Hintergrund besteht eine Aufgabe der vorliegenden Erfindung darin, ein verbessertes Verfahren zum Registrieren bzw. räumlichen Inbeziehungsetzen mehrerer aus 2D-Einzelschnittbildern gebildeter Punktwolken bereitzustellen.

Demgemäß wird ein Verfahren zum Registrieren mehrerer medizinischer, zweidimensionaler, 2D, Einzelschnittbilder in einem gemeinsamen dreidimensionalen, 3D, Koordinatensystem vorgeschlagen. Das Verfahren umfasst: a) Aufnehmen einer oder mehrerer Bildsequenzen aus jeweils mehreren 2D-Einzelschnittbildern eines Körperabschnitts eines Patienten mit einer bildgebenden Vorrichtung an unterschiedlichen Positionen entlang des Körperabschnitts; b) für jedes der mehreren 2D-Einzelschnittbilder: b.1) Bestimmen einer Anzahl 2D-Konturen jeweiliger anatomischer und/oder geometrischer Strukturen in dem 2D-Einzelschnittbild, b.2) Bestimmen einer dünn besetzten Punktwolke mit mehreren Oberflächenpunkten auf jeder der 2D-Konturen, und b.3) Positionieren und Orientieren der dünn besetzten Punktwolke in dem gemeinsamen 3D-Koordinatensystem anhand einer bekannten, gemessenen oder geschätzten Position und Orientierung des 2D-Einzelschnittbilds; und c) Registrieren einer aus einer oder mehreren der dünn besetzten Punktwolken gebildeten ersten Punktwolke an einer aus einer oder mehreren der dünn besetzten Punktwolken gebildeten zweiten Punktwolke durch Bestimmen einer räumlichen Transformation, welche die erste Punktwolke dergestalt in die zweite Punktwolke überführt, dass eine Fehlanpassung zwischen der gemäß der räumlichen Transformation transformierten ersten Punktwolke und der zweiten Punktwolke möglichst gering ist, durch Minimieren einer Verlustfunktion, die eine Abweichung zwischen zwei rasterisierten, mit Helligkeitswerten dicht besetzten 3D-Volumina angibt, welche durch Rasterisieren der gemäß der räumlichen Transformation transformierten ersten Punktwolke und Rasterisieren der zweiten Punktwolke gewonnen werden.

Demgemäß werden insbesondere die aufgenommenen 2D-Einzelschnittbilder zunächst abstrahiert, indem Konturen anatomischer und/oder geometrischer Strukturen bestimmt und aus diesen Punktwolken gewonnen werden. Sodann können die zwei Punktwolken vorteilhafterweise hochgenau und sehr schnell in räumliche Korrespondenz gebracht werden. Die Verlustfunktion ist hierbei anhand aus den Punktwolken rasterisierter und mit Helligkeitswerten dicht besetzter 3D-Volumina definiert. Die Rasterisierung der 3D-Volumina aus den Punktwolken kann hoch effizient beispielsweise auf einer GPU unter Verwendung von Matrixoperationen mit dünn besetzten Matrizen ausgeführt werden und die Verlustfunktion kann sodann durch simple Summation der Abstände zwischen korrespondierenden Voxeln der 3D-Volumina gebildet werden, was eine vielfach höhere Effizienz und Genauigkeit als bisherige analytische Ansätze erlaubt, bei denen Punktwolken direkt aneinander registriert wurden, das heißt, eine Verlustfunktion, die direkt anhand der Punktwolken definiert ist, minimiert wurde. Die gewonnene Effizienz und Genauigkeit eröffnet die Möglichkeit zur Durchführung des vorgeschlagenen Erfahrens in Echtzeit auf einem Mobilgerät im klinischen Setting oder die Gewinnung hochpräziser, ultrahochauflösender Daten über räumliche Transformationen für die medizinische Begutachtung und Forschung und dergleichen, ebenfalls in Echtzeit.

Das vorgeschlagene Verfahren kann insbesondere ein in Teilen oder vollständig computerimplementiertes Verfahren sein, das insbesondere von einem mit der bildgebenden Vorrichtung kommunikationsverbundenen oder in diese integrierten Computer implementiert wird.

Wird Schritt a) von einem Computer implementiert, so kann Schritt a) insbesondere umfassen, dass der Computer Befehle an die bildgebende Vorrichtung sendet, um diese zum Aufnehmen der ein oder mehreren Bildsequenzen zu veranlassen, und/oder Befehle an eine mechanische Vorrichtung sendet, um diese zu veranlassen, die bildgebende Vorrichtung entlang einer vorgegebenen Trajektorie entlang des Körperabschnitts des Patienten zu führen, während die Bildsequenz aufgenommen wird, und/oder Anweisungen in menschenlesbarer Form oder Sprachanweisungen an eine menschliche Bedienperson ausgibt, die die menschliche Bedienperson anweisen, die bildgebende Vorrichtung entlang der vorgegebenen Trajektorie entlang des Körperabschnitts zu führen.

Der Begriff des "Registrierens" zweier Einzelschnittbildern und/oder Punktwolken kann auch als "räumliches Inbeziehungsetzen" der beiden 2D-Einzelschnittbilder und/oder Punktwolken oder als "Bestimmen einer räumlichen Transformation" zwischen den beiden 2D-Einzelschnittbildern und/oder Punktwolken aufgefasst werden.

Das gemeinsame 3D-Koordinatensystem kann beispielsweise sein: ein externes Referenz-Koordinatensystem, ein Koordinatensystem eines Tisches oder einer Auflage, auf welcher der Patient oder sein Körperabschnitt liegt, ein durch das erste 2D-Einzelschnittbild der Bildsequenz definiertes 3D-Koordinatensystem und. Die Wahl des gemeinsamen 3D-Koordinatensystems ist nicht speziell beschränkt.

Innerhalb einer einzelnen Bildsequenz, auch als Sweep bezeichnet, wird jedes der mehreren 2D-Einzelschnittbildern an einer unterschiedlichen Position entlang des Körperabschnitts aufgenommen. Innerhalb unterschiedlichen Bildsequenzen besteht keine derartige Einschränkung, und ein 2D-Einzelschnittbild in einer zweiten Bildsequenz kann, muss jedoch nicht, an einer gleichen Position aufgenommen werden wie ein korrespondierendes 2D-Einzelschnittbild in einer ersten Bildsequenz.

Die bildgebende Vorrichtung kann beispielsweise eine Ultraschallsonde, die beispielsweise im B-Mode betrieben wird, oder ein CT-Scanner sein.

Die bildgebende Vorrichtung kann von einer menschlichen Bedienperson oder automatisch durch eine maschinelle Vorrichtung an dem Körperabschnitt des Patienten entlang geführt werden.

Das Bestimmen der Anzahl 2D-Konturen anatomischer und/oder geometrischer Strukturen in dem 2D-Einzelschnittbild kann beispielsweise mit einem bekannten Verfahren zur Multi-Label-Segmentierung erfolgen. Dieser Schritt kann beispielsweise mit einem neuronalen Faltungsnetzwerk automatisch durchgeführt werden, wobei das neuronale Faltungsnetzwerk mit Expertendaten, d.h. mit an Patienten aufgenommen 2D-Einzelschnittbildern als Trainings-Eingabedaten und von medizinischen Experten vorgenommenen Multi-Label-Segmentierungen als Trainings-Ausgabedaten, in einem Verfahren des überwachten Lernens trainiert worden ist.

Der Begriff "eine Anzahl" umfasst vorliegend eine Anzahl von einem oder mehreren Elementen, das heißt eine Anzahl $N \geq 1$.

Es versteht sich, dass es geschehen kann, dass an einem konkreten 2D-Einzelschnittbild keine einzige 2D-Kontur bestimmt werden kann (sog. Leerscan, tritt insbesondere bei CT-Scannern als bildgebende Vorrichtung auf).

Hier und im folgende ngilt ein 2D-Einzelbild, das einem Leerscan entspricht und/oder in dem keine 2D-Kontur bestimmt werden kann, als nicht von den "mehreren 2D-Einzelbildern" gemäß Schritt a) umfasst. Dementsprechend können zwei 2D-Einzelbilder und/oder zwei von diesen abgeleitete Punktwolken auch dann als "aufeinanderfolgend" gelten, wenn zwischen den entsprechenden zwei 2D-einzelbilder ein oder mehrere derartige Leerscans erfolgten.

Die Oberflächenpunkte können entlang der jeweiligen bestimmten Kontur gewählt werden. Beispielsweise können die Oberflächenpunkte äquidistant entlang der Kontur gewählt werden. Alternativ hierzu kann eine Distanz zwischen zwei Oberflächenpunkten entlang der Kontur beispielsweise mit zunehmender Krümmung der Kontur zwischen den beiden Oberflächenpunkten abnehmen und mit abnehmender Krümmung zunehmen, so dass Abschnitte der Kontur mit großer Krümmung genauer erfasst werden als relativ geradlinige Abschnitte.

Die Punktwolke umfasst für jede der Konturen wenigstens drei Oberflächenpunkte, vorzugsweise wenigstens 10 Oberflächenpunkte, besonders vorzugsweise 100 oder einige 100 Oberflächenpunkte und ganz besonders bevorzugt 1000 oder einige 1000 Oberflächenpunkte oder mehr.

Zum Zeitpunkt des Durchführens des Schritts b.2) kann die Punktwolke als eine zweidimensionale Punktwolke aufgefasst werden, wobei Koordinaten der Oberflächenpunkte, aus denen die 2D-Punktwolke gebildet ist, relative 2D-Koordinaten bezüglich eines Ursprungs des 2D-Einzelschnittbilds sein können.

Zum Zeitpunkt des Durchführens des Schritts b.3) werden in diesem Fall die Koordinaten der Oberflächenpunkte, aus denen die 2D-Punktwolke angeben, in das gemeinsame 3D-Koordinatensystem transformiert. Ab diesem Zeitpunkt kann die Punktwolke als eine 3D-Punktwolke aufgefasst werden, deren Oberflächenpunkte jeweilige Konturen von 2D-Ebenen im 3D-Raum angeben und dreidimensionale Koordinaten aufweisen, die relativ zu dem gemeinsamen 3D-Koordinatensystem definiert sind.

Eine jeweilige der Punktwolken umfasst somit insbesondere für jeden Oberflächenpunkt eine 3D-Koordinate in dem gemeinsamen 3D-Koordinatensystem. Die Punktwolke kann darüber hinaus weitere Informationen umfassen. Wenn beispielsweise in Schritt b.1) eine Multi-Label-Segmentierung durchgeführt wurde, kann die Punktwolke für jeden Oberflächenpunkt ferner eine Labelzugehörigkeit umfassen, das heißt eine Angabe dazu, zu welchem Label bzw. zu welcher der ggf. mehreren geometrischen oder anatomischen Strukturen der betreffende Oberflächenpunkt gehört.

Zum Positionieren und Orientieren der Punktwolke im 3D-Raum wird eine Angabe darüber benötigt, an welcher Position und Orientierung das 2D-Einzelschnittbild gewonnen wurde. Wenn die bildgebende Vorrichtung der von einer maschinellen Vorrichtung geführte CT-Scanner ist, kann die Position und Orientierung des 2D-Einzelschnittbilds bei Aufnahme aus einem Steuerprogramm der maschinellen Vorrichtung gewonnen werden, das mit einem Zeitstempel in Beziehung gesetzt wird, welcher den Zeitpunkt der Aufnahme des 2D-Einzelschnittbilds angibt. Wenn die bildgebende Vorrichtung eine von einer menschlichen Bedienperson geführte bildgebende Vorrichtung, wie etwa die 2D-Ultraschallsonde, ist, kann die Position und Orientierung des 2D-Einzelschnittbilds bei Aufnahme mittels einem oder mehrerer Sensoren der bildgebenden Vorrichtung gemessen werden. Verfügt die 2D-Ultraschallsonde nicht über derartige Sensoren, kann die Position und Orientierung des 2D-Einzelschnittbildes anhand einer vorgegebenen Trajektorie, welcher die menschliche Bedienposition beim Führen der bildgebenden Vorrichtung folgen sollte und anhand des Zeitstempels des 2D-Einzelschnittbilds zumindest geschätzt werden.

Je nachdem, ob eine geschätzte, eine gemessene oder eine bekannte Position und Orientierung der 2D-Einzelschnittbilds verwendet werden, kann das Positionieren und Orientieren der Punktwolke im 3D-Raum als ein vorläufiges Positionieren und Orientieren oder als ein endgültiges Positionieren und Orientieren aufgefasst werden.

In Schritt c) bedeutet eine "erste Punktwolke, die aus einer der dünn besetzten Punktwolke gebildet ist", beispielsweise, dass genau eine der mehreren der dünn besetzten Punktwolken ausgewählt und als die erste Punktwolke verwendet wird, und "eine erste Punktwolke, die aus mehreren der dünn besetzten Punktwolken gebildet ist", bedeutet, dass mehrere der in den Schritt b) bestimmten und positionierten und orientierten Punktwolken zusammen zu der ersten Punktwolke vereinigt werden. Die erste Punktwolke kann somit auch Oberflächenpunkte auf mehreren Konturen aufweisen, die auf verschiedenen 2D-Ebenen angeordnet sein können.

Für die "zweite Punktwolke" gilt Entsprechendes. Somit können beispielsweise in Schritt c) Punktwolken, die mehreren aufeinanderfolgenden 2D-Einzelschnittbildern einer Sequenz entsprechen, zusammen als eine erste Punktwolke behandelt werden und an einer zweiten Punktwolke registriert werden, die sich aus mehreren weiteren, ebenfalls aufeinanderfolgenden 2D-Einzelschnittbildern derselben oder einer weiteren Sequenz gebildet ist. Denkbar ist auch, mehrere oder alle der Punktwolken einer Bildsequenz zu der ersten Punktwolke zusammenzufassen und diese an einer zweiten Punktwolke zu registrieren, die aus allen der Punktwolken einer weiteren Bildsequenz gebildet ist.

Welche der in Schritt b) bestimmten und positionierten und orientierten dünn besetzten Punktwolken zur Bildung der ersten und der zweiten Punktwolke nach welchem Schema für die Registrierung in Schritt c) ausgewählt werden, hängt vom konkreten Anwendungsfall ab und es besteht keine spezielle Einschränkung dahingehend.

Die räumliche Transformation gibt eine Vorschrift an, mit der die erste Punktwolke in eine Punktwolke überführt wird, deren Fehlanpassung mit der zweiten Punktwolke möglichst gering ist. Die räumliche Transformation kann beispielsweise ein Vektorfeld sein, das für jeden Oberflächenpunkt der ersten Punktwolke eine Translation spezifiziert.

Ein rasterisiertes, dicht besetztes 3D-Volumen kann als ein 3D-Volumen aufgefasst werden, das gemäß einer vordefinierten Auflösung eine definierte Anzahl von Voxeln, die allseitig (mit Ausnahme der an einer jeweiligen Randfläche des 3D-Volumens angeordneten Voxel) aneinander angrenzen, wobei jedes Voxel über eine ganzzahlige relative 3D-Koordinate eindeutig identifizierbar ist und jedes der Voxel eine Helligkeitsangabe aufweist.

Demgemäß kann unter "Rasterisieren" einer Punktwolke zum Erlangen eines 3D-Volumens verstanden werden, die Punktwolke dergestalt zu verarbeiten, dass für jedes Voxel des 3D-Volumens, das sich in einer Umgebung mindestens eines der Punktwolke befindet, eine Helligkeitsangabe gewählt wird, die indikativ für die Anzahl der Oberflächenpunkte und die Entfernung zu einem jeweiligen der Oberflächenpunkte in der Umgebung des Voxels ist. Die "Umgebung" kann hierbei geeignet gewählt werden, zum Beispiel nur Oberflächenpunkte, die innerhalb des Voxels liegen, nur Oberflächenpunkte, die um nicht mehr als eine Voxellänge von dem Voxel entfernt sind, oder dergleichen.

Eine Auflösung zur Rasterisierung des 3D-Volumens kann geeignet gewählt werden. Vorzugsweise beträgt eine Auflösung wenigstens 50x50x50 Voxel, besonders vorzugsweise 80x80x80 Voxel oder 100x100x100 Voxel, und ganz besonders bevorzugt auch bis zu 512x512x512 Voxel oder mehr.

Eine Helligkeitsangabe ist insbesondere eine Angabe, die einen von mehreren Werten annehmen kann, wobei die mehreren Werte einen niedrigsten Wert, einen höchsten Wert und mehrere Zwischenwerte zwischen dem niedrigsten Wert und dem höchsten Wert umfassen. Insbesondere kann ein niedrigster Wert, beispielsweise null, angeben, dass das Voxel nicht belegt ist (sich kein Oberflächenpunkt in der Umgebung des Voxels befindet), ein höchster Wert, beispielsweise eins, oder 4096, oder 65536 oder $2^{32}$, kann angeben, dass das Voxel vollständig belegt ist (sich wenigstens ein Oberflächenpunkt im Zentrum des Voxels befindet), und die mehreren Zwischenwerte (ganzzahlige Zwischenwerte oder Fließkomma-Zwischenwerte) können Abstufungen angeben, zu welchem Grad oder mit welcher Wahrscheinlichkeit das Voxel belegt ist. Diese Zwischenwerte können auch als "Grauwerte" aufgefasst werden.

Dadurch, dass auf jedem Voxel nicht nur eine Belegungsangabe, sondern eine Helligkeitsangabe mit mehreren und vorzugsweise sehr vielen möglichen Zwischenwerten angeordnet ist, ist das rasterisierte 3D-Volumen vorzugsweise nach Ortskoordinaten der Punkte der Punktwolke differenzierbar. Das heißt, wenn ein Punkt der ersten oder zweiten Punktwolke geringfügig verschoben wird, ändert sich die Helligkeitsangabe kontinuierlich und nicht, wie bei einem einfachen Occupancy-Gitter, zunächst nicht und dann bei weiterer Verschiebung des Punkts plötzlich und sprunghaft. Demzufolge kann auch eine Verlustfunktion, die beispielsweise Differenzen zwischen korrespondierenden Voxeln der beiden 3D-Volumina aufsummiert, sich kontinuierlich verändern, wenn die räumliche Transformation variiert wird. Somit kann vorteilhafterweise ein Gradient der Verlustfunktion in Bezug auf Änderungen der räumlichen Transformation gebildet werden und, rein beispielsweise mit einem gradientenbasierten Verfahren, eine räumliche Transformation ermittelt werden, die die Verlustfunktion minimiert.

Unter "Minimieren" der Verlustfunktion ist gemeint, den Wert der Verlustfunktion, der sich ergibt, wenn die Verlustfunktion mit aus der gemäß der endgültig gewählten räumlichen Transformation transformierten ersten Punktwolke und aus der zweiten Punktwolke rasterisierten 3D-Volumina ausgewertet wird, so weit wie mit dem vorgeschlagenen Verfahren möglich reduziert wird. Hierbei ist es nicht notwendig, dass ein theoretisches absolutes Minimum des Werts der Verlustfunktion erreicht wird, sondern es reicht, wenn der Wert der Verlustfunktion durch geeignetes Bestimmen bzw. Variieren der räumlichen Transformation verringert wird.

Die Begriffe "dünn besetzt" (engl. "sparse") und "dicht besetzt" (engl. "dense") sind vor dem Hintergrund der Unterteilung des dicht besetzten 3D-Volumens in räumlich ausgedehnte Voxel und vor dem Hintergrund der Darstellung der dünn besetzten Punktwolke als Menge von Punkten mit exakten Ortskoordinaten andererseits auszulegen. Das heißt, das rasterisierte 3D-Volumen gilt als "dicht besetzt", weil die Voxel, aus denen das rasterisierte 3D-Volumen gebildet ist, eine gewisse Ausdehnung aufweisen und allseitig aneinandergrenzen, so dass für jeden beliebigen Raumpunkt innerhalb des rasterisierten 3D-Volumens genau ein zugehöriges Voxel identifiziert werden kann, für dessen Voxelvolumen insgesamt ein Helligkeitswert angegeben ist. Es bleibt also kein nicht von einem Voxel belegter Leerraum innerhalb des rasterisierten 3D-Volumens. Demgegenüber gilt die jeweilige Punktwolke als "dünn besetzt", weil die Oberflächenpunkte, aus denen die Punktwolke besteht, exakt lokalisiert sind und keine Ausdehnung aufweisen, mithin zwischen den Oberflächenpunkten auf den Konturen der anatomischen und/oder geometrischen Strukturen notwendigerweise Abstände verbleiben.

Die Begriffe "dünn besetzt" und "dicht besetzt" sind demgegenüber nicht so auszulegen, dass, wenn man die Punktwolke mit dem rasterisierten 3D-Volumen übereinanderlegt, eine Dichte der Oberflächenpunkte notwendiger geringer wäre als eine Dichte der Voxel; im Gegenteil ist es neben dem Fall, dass eine Dichte der Oberflächenpunkte geringer ist als eine Dichte der Voxel, auch denkbar, dass die Dichte der Oberflächenpunkte gleich groß wie oder größer als eine Dichte der Voxel ist, so dass im Mittel mehr als ein Oberflächenpunkt in einem Voxel zu liegen kommt, wenn man die Punktwolke mit dem rasterisierten 3D-Volumen übereinanderlegt. Dennoch gelten vorliegend auch in den letztgenannten Fällen die Punktwolken als dünn besetzt und die rasterisierten 3D-Volumina als dicht besetzt.

Das Merkmal, wonach die räumliche Transformation dergestalt bestimmt wird, dass die Verlustfunktion minimiert wird, umfasst folgende Bedeutungen: Schritt c) kann in einem numerischen Verfahren durchgeführt werden, das eine anfängliche geschätzte räumliche Transformation wählt und sodann die räumliche Transformation variiert, die Punktwolken rasterisiert, um die 3D-Volumina zu erlangen, und die Verlustfunktion anhand der rasterisierten 3D-Volumina auswertet, um ein Minimum der Verlustfunktion zu erreichen. Schritt c) kann alternativ oder zusätzlich hierzu mit einem trainierten neuronalen Netzwerk ausgeführt werden, das mit der ersten und der zweiten Punktwolke als Eingangsdaten direkt eine räumliche Transformation vorhersagt. In diesem Fall ist das genannte Merkmal so auszulegen, dass im Rahmen des Trainings des neuronalen Netzwerks Trainings-Punktwolken rasterisiert wurden, um die rasterisierten 3D-Volumina zu erlangen, und die Verlustfunktion im Rahmen des Trainings ausgewertet wurde. Beispielsweise kann die Verlustfunktion als Belohnungsfunktion im Rahmen von unüberwachtem Learning verwendet worden sein.

Gemäß einer Ausführungsform wird in Schritt c) die räumliche Transformation in einem numerischen Verfahren bestimmt, bei dem die räumliche Transformation iterativ variiert wird, um einen von der räumlichen Transformation abhängigen Wert der Verlustfunktion zu verringern oder zu minimieren.

Das numerische Verfahren kann beispielsweise ein gradientenbasiertes Verfahren sein, beispielsweise das Verfahren des steilsten Gradienten.

Hierbei kann der Vorteil der vorgeschlagene Rasterisierung zum Tragen kommen, dass bei Variationen der räumlichen Transformation sich die Helligkeitswerte der rasterisierten 3D-Volumina stetig und nicht sprunghaft ändern, so dass ein Gradient der Helligkeitswerte bzw. der von diesen abhängigen Verlustfunktion bezüglich Änderungen der räumlichen Transformation gebildet werden kann.

Das heißt, insbesondere kann bei dem numerischen Verfahren die zweite Punktwolke rasterisiert werden, um das mit Helligkeitswerten dicht besetzte zweite 3D-Volumen zu erlangen, und eine anfängliche Transformation, die beispielsweise anhand der bekannten, gemessenen oder geschätzten räumlichen Position und Orientierung der jeweiligen 2D-Einzelschnittbilder bestimmt wird, kann als aktuelle räumliche Transformation festgelegt werden, und in jeder Iteration kann die gemäß der aktuellen räumlichen Transformation transformierte erste Punktwolke rasterisiert werden, um das mit Helligkeitswerten dicht besetzte erste 3D-Volumen zu erlangen, und in jeder Iteration kann die Verlustfunktion oder ein Gradient der Verlustfunktion anhand der beiden rasterisierten, dicht besetzten 3D-Volumina ausgewertet werden, um zu bestimmen, wie die räumliche Transformation in der nächsten Iteration zu variieren ist.

Gemäß einer weiteren Ausführungsform wird in Schritt c) die räumliche Transformation als Ausgabe eines trainierten neuronalen Netzwerks ermittelt, in das die erste und die zweite Punktwolke eingegeben werden, wobei das neuronale Netzwerk durch unüberwachtes Lernen mit Trainings-Eingangsdatensätzen aus ersten und zweiten dünn besetzten Punktwolken unter Verwendung der Verlustfunktion oder einer von der Verlustfunktion abhängigen Funktion als Belohnungsfunktion trainiert ist.

Das heißt, die vorgeschlagene Verlustfunktion, die durch Rasterisieren der Trainings-Punktwolken, um rasterisierte 3D-Volumina zu erhalten, ausgewertet werden kann, eignet sich aufgrund ihrer stetigen Differenzierbarkeit auch als Belohnungsfunktion, mit der ein unüberwachtes Training eines neuronalen Netzwerks durchgeführt werden kann.

Demgemäß kann das Training des neuronalen Netzwerks vereinfacht und beschleunigt werden bzw. die von dem neuronalen Netzwerk generierten räumlichen Transformationen können vorteilhaft einen verringerten Registrierungsfehler aufweisen.

Das heißt, das Training des neuronalen Netzwerks kann insbesondere gemäß dem folgenden Verfahren erfolgen:

Wiederholtes Durchführen der folgenden Schritte für eine Vielzahl von ersten und zweiten dünn besetzten Punktwolken: Bereitstellen einer ersten und einer zweiten dünn besetzten Punktwolke als Trainings-Eingabedaten an das neuronale Netzwerk; Ermitteln einer prognostizierten Transformation als Ausgabe des neuronalen Netzwerks; Transformieren der ersten dünn besetzten Punktwolke gemäß der prognostizierten Transformation; Rasterisieren der transformierten ersten und der zweiten dünn besetzten Punktwolke, um ein mit Helligkeitswerten dicht besetztes erstes 3D-Volumen und ein mit Helligkeitswerten dicht besetztes zweites 3D-Volumen zu erlangen; Bestimmen des Wertes der Verlustfunktion für das erste und das zweite dicht besetzte zweite 3D-Volumen; und Anpassen von Parametern von Neuronen des neuronalen Netzwerks unter Verwendung des bestimmten Werts der Verlustfunktion als Belohnung oder Bestrafung im Rahmen des unüberwachten Lernens.

Hierbei können als die ersten und zweiten dünn besetzten Punktwolken, die als Trainingsdaten verwendet werden, aus Punktwolken verwendet werden, die anhand von zuvor an einer Vielzahl von Patienten aufgenommenen Bildsequenzen derjenigen Art, auf die das vorgeschlagene Verfahren angewendet werden soll, gewonnen werden.

Es versteht sich, dass die Ausführungsform, bei der das neuronale Netzwerk verwendet wird, um die räumliche Transformation zu bestimmen, und die Ausführungsform, bei der die räumliche Transformation in einem numerischen Verfahren bestimmt wird, auch kombiniert werden können. Beispielsweise kann zunächst mit dem neuronalen Netzwerk eine räumliche Transformation bestimmt werden und mit dieser als Ausgangspunkt sodann das numerische Verfahren durchgeführt werden, um die Vorhersage des neuronalen Netzwerks zu überprüfen und weiter zu präzisieren.

Gemäß einer Ausführungsform erfolgt das Rasterisieren dergestalt, dass das durch Rasterisieren der jeweiligen Punktwolke erlangte, mit Helligkeitswerten dicht besetzte 3D-Volumen nach Ortskoordinaten der Oberflächenpunkte der jeweiligen Punktwolke differenzierbar ist, so dass die anhand der mit Helligkeitswerten dicht besetzten 3D-Volumina definierte Verlustfunktion nach Parametern der räumlichen Transformation differenzierbar ist.

Wenn die räumliche Transformation als Vektorfeld dargestellt wird, wobei ein jeweiliger Vektor des Vektorfeldes ein Translationsvektor ist, der die Translation für einen jeweiligen der Oberflächenpunkte der ersten Punktwolke angeben, die zu vollführen ist, damit die erste Punktwolke mit der geringstmöglichen Fehlanpassung in die zweite Punktwolke überführt wird, so können diese Translationsvektoren als "Parameter der räumlichen Transformation" aufgefasst werden.

Die Differenzierbarkeit wird hierbei insbesondere vorteilhafterweise dadurch erreicht, dass die dicht besetzten 3D-Volumina nicht nur mit binären Besetzungswerten, sondern mit graduell abgestuften Helligkeitswerten besetzt sind.

Gemäß einer weiteren Ausführungsform erfolgt das Rasterisieren durch invertierte trilineare Interpolation.

Bei der invertierten trilinearen Interpolation ergeben sich vorteilhafterweise kontinuierliche Werte als Helligkeitswerte, die sich bei Änderung der Ortsvektoren der Punktwolke kontinuierlich ändern und somit nach den Ortsvektoren der Punktwolke differenzierbar sind.

Zudem kann das Rasterisieren durch invertierte trilineare Interpolation besonders vorteilhaft durch eine Matrixoperation mit einer dünn besetzten (spärlichen, engl. "sparse") Matrix durchgeführt werden, die sich besonders effizient auf eine GPU auslagern lässt.

Gemäß einer weiteren Ausführungsform ist die Verlustfunktion eine monoton ansteigende Abstandsfunktion, die als Summe eines von Abständen zwischen den Helligkeitswerten korrespondierender Voxel der beiden mit Helligkeitswerten dicht besetzten 3D-Volumina abhängigen Terms definiert ist.

Die Verlustfunktion kann beispielsweise eine Summe über die Abstandsquadrate oder über die Wurzel der Abstandsquadrate zwischen den Helligkeitswerten korrespondierender Voxel sein. Es sind jedoch auch komplexere Verlustfunktionen denkbar, wie beispielsweise der später beschriebene Huber-Loss.

Durch geeignete Wahl der Verlustfunktion kann die Konvergenz des numerischen Verfahrens oder des unüberwachten Trainings des neuronalen Netzwerks vorteilhafterweise geeignet beeinflusst und verbessert werden.

Die Tatsache, dass die Verlustfunktion abhängig von Werten der Voxel der rasterisierten 3D-Volumina definiert ist und nicht unmittelbar abhängig von den Oberflächenpunkten der jeweiligen Punktwolken, erlaubt das Erzielen aller Vorteile des vorgeschlagenen Verfahrens, insbesondere der höheren rechnerischen Effizienz bzw. besseren Genauigkeit bei gleichem Rechenaufwand und der Anwendbarkeit auf die Registrierung von jeweils mehr als einer Punktwolke aneinander in einem einzelnen Vorgang.

Gemäß einer weiteren Ausführungsform wird die bildgebende Vorrichtung für die Aufnahme einer Bildsequenz von einer Bedienperson entlang einer vorgegebenen Trajektorie an dem Körperabschnitt entlanggeführt, und in Schritt c) werden jeweils in der Bildsequenz aufeinanderfolgende dünn besetzte Punktwolken aneinander registriert, und es werden wenigstens die Positionen und Orientierungen der dünn besetzten Punktwolken gemäß der beim Registrieren bestimmten räumlichen Transformationen korrigiert.

Wenn die bildgebende Vorrichtung von einer menschlichen Bedienperson geführt wird, sind die genauen Position und Orientierungen jeweils aufeinander folgender 2D-Einzelschnittbilder ggf. nicht genau bekannt und müssen geschätzt werden. Die einzelnen dünn besetzten Punktwolken werden daher zunächst nicht an den korrekten Positionen und Orientierungen angeordnet.

Ein vorteilhafter Anwendungsfall des vorgeschlagenen Verfahrens besteht somit gemäß der vorliegenden Ausführungsform darin, dass die Positionen und Orientierungen der dünn besetzten Punktwolken durch Registrieren der Punktwolken aneinander korrigiert werden können.

Vorzugsweise werden nicht nur die Positionen und Orientierungen korrigiert, sondern auch die Oberflächenpunkte der jeweiligen Punktwolke selbst. In diesem Fall spricht man auch von einer deformierbaren Registrierung.

Das heißt, beispielsweise kann nach jeder erfolgten Registrierung einer ersten Punktwolke an einer zweiten Punktwolke die zweite Punktwolke durch die transformierte erste Punktwolke ersetzt werden, wodurch sich Position, Orientierung und auch die Form der von den Oberflächenpunkten beschriebenen Konturen mehr oder weniger stark verändern. Sodann kann die solchermaßen korrigierte zweite Punktwolke als neue erste Punktwolke verwendet werden und wiederum an der nächsten in der Bildsequenz darauffolgenden dünn besetzten Punktwolke registriert werden.

Man erhält auf diese Weise eine Menge von Punktwolken, deren Positionen, Orientierungen, und vorzugsweise auch Konturen im Rahmen einer starren oder vorzugsweise deformierbaren Registrierung korrigiert worden sind. Diese korrigierten Punktwolken können im weiteren Verlauf zur Visualisierung verwendet oder anderweitig weiter ausgewertet werden.

Auf diese Weise kann durch das vorgeschlagene Verfahren ein Einfluss einer ungenauen Führung der bildgebenden Vorrichtung durch eine menschliche Bedienperson vorteilhafterweise kompensiert werden.

Gemäß einer weiteren Ausführungsform umfasst das vorgeschlagene Verfahren ferner d) Rasterisieren der mehreren aneinander registrierten, dünn besetzten 3D-Punktwolken, um ein mit Helligkeitswerten dicht besetztes, fusioniertes 3D-Gesamtvolumen zu erhalten; und e) Ausgeben des 3D-Gesamtvolumens und/oder Visualisieren des 3D-Gesamtvolumens auf einer Anzeigevorrichtung.

Demgemäß kann eine korrekt registrierte, fehlerarme 3D-Darstellung auch dann visualisiert werden, wenn eine menschliche Bedienperson die bildgebende Vorrichtung nicht exakt an einer vorgegebenen Trajektorie entlang bewegt hat.

Gemäß einer Ausführungsform umfasst das Verfahren ferner: f) Rekonstruieren einer tatsächlich mit der bildgebenden Vorrichtung vollführten Trajektorie anhand der in Schritt c) bestimmten korrigierten Positionen und Orientierungen der dünn besetzten Punktwolken; g) Vergleichen der vorgegebenen Trajektorie mit der in Schritt f) rekonstruierten, tatsächlich vollführten Trajektorie; und h) Ausgeben eines Signals, falls bestimmt wird, dass die rekonstruierte, tat-sächliche Trajektorie um mehr als einen vorbestimmten Schwellwert von der vorgegebenen Trajektorie der bildgebenden Vorrichtung abweicht.

Das heißt, unter der Annahme, dass der Patient und die inneren Organe, die abgebildet werden soll - wie etwa seine Knochen - während der Aufnahme der

Bildsequenz ruhen, entspricht eine räumliche Transformation, die eine dünn besetzte Punktwolke in eine darauffolgende dünn besetzte Punktwolke mit der geringstmöglichen Fehlanpassung überführt, einer Transformation, die eine räumliche Position und Orientierung der bildgebenden Vorrichtung zum Zeitpunkt des Aufnehmens des zu der einen dünn besetzten Punktwolke gehörigen 2D-Einzelschnittbilds in eine räumliche Position und Orientierung der bildgebenden Vorrichtung zum Zeitpunkt des Aufnehmens des zu der darauffolgenden dünn besetzten Punktwolke gehörigen 2D-Einzelschnittbilds überführt. Somit kann ausgehend von den in Schritt c) bestimmten räumlichen Transformationen und/oder anhand der in Schritt c) bestimmten korrigierten Positionen und Orientierungen der dünn besetzten Punktwolken die Trajektorie (die Translationen und Rotationen) rekonstruiert werden, die die bildgebende Vorrichtung beim Aufnehmen der Bildsequenz vollführt hat.

Der vorgegebene Schwellwert, bei dessen Überschreiten die Abweichung signalisiert wird, kann als Absolutwert oder als Relativwert bezüglich einer räumlichen Distanz zwischen der rekonstruierten und der vorgegebenen Trajektorie definiert sein. Alternativ hierzu kann der vorgegebene Schwellwert über die Fehlanpassung definiert sein, die sich in Schritt c) beim Vorhersagen der räumlichen Transformation ergibt, das heißt, das Signal kann ausgegeben werden, wenn sich in Schritt c) keine Transformation mehr ermitteln lässt, die die Fehlanpassung hinreichend reduziert (die Verlustfunktion hinreichend minimiert).

Das Signal kann ein akustisches oder optisches Signal oder eine Anzeige auf einer Anzeigeeinrichtung sein.

Demgemäß kann in Reaktion auf das Signal die menschliche Bedienperson die Position und Orientierung der Ultraschallsonde korrigieren, um die Fehlanpassung zu verringern, oder in Reaktion auf das Signal entscheiden, die Aufnahme der Bildsequenz abzubrechen und die Bildsequenz erneut von vorn aufzunehmen.

Demgemäß ist vorteilhaft eine feedbackbasierte Führung der bildgebenden Vorrichtung durch die menschliche Bedienperson möglich.

Das Signal kann auch ein elektronisches Signal oder ein Datensignal sein, das von einer anderen weiteren computerisierten Vorrichtung oder Einheit weiterverarbeitet wird. In diesem Fall kann automatisch entschieden werden, dass aufgenommene Bildsequenzen, bei deren Aufnahme das Signal ausgegeben wurde, als minderwertig verworfen und nicht weiter berücksichtigt werden.

Demgemäß kann die Weiterverarbeitung minderwertiger Bildsequenzen vorteilhafterweise verhindert werden.

Gemäß einer weiteren Ausführungsform werden in Schritt a) mehrere Bildsequenzen aufgenommen; in Schritt c) werden jeweils mehrere dünn besetzten Punktwolken einer der Bildsequenzen an korrespondierenden mehreren dünn besetzten Punktwolken einer weiteren der Bildsequenzen registriert.

Das heißt, das vorgeschlagene Verfahren, das die erste und die zweite Punktwolke durch Minimieren der Verlustfunktion aneinander registriert, welche anhand der rasterisierten, mit den Helligkeitswerten dicht besetzten 3D-Volumina definiert ist, ist anders als Verfahren aus dem Stand der Technik, die unmittelbar den Abstand zwischen Punktwolken zu reduzieren suchen, vorteilhafterweise nicht auf das Registrieren zweier aufeinanderfolgender 2D-Einzelschnittbilder bzw. zweier aufeinanderfolgender einzelner Punktwolken aneinander beschränkt.

Vielmehr ist es auch denkbar, die erste Punktwolke und die zweite Punktwolke aus jeweils mehreren oder aus allen der aus den einzelnen 2D-Einzelschnittbildern bestimmten Punktwolken einer Sequenz zu bilden. Sodann werden durch Rasterisieren der ersten Punktwolke, die einen Abschnitt der oder die gesamte erste Bildsequenz repräsentiert, und der zweiten Punktwolke, die einen Abschnitt der zweiten Bildsequenz oder die gesamte zweite Bildsequenz repräsentiert, zwei mit Helligkeitswerten dicht besetzte 3D-Volumina erhalten, die jeweils mehrere Punktwolken eines Abschnitts einer Bildsequenz oder einer gesamten Bildsequenz repräsentieren. Durch Minimieren der Verlustfunktion, die eine Fehlabstimmung zwischen diesen beiden 3D-Volumina angibt, können auf diese Weise die anhand unterschiedlicher Bildsequenzen bestimmten Punktwolken in nur einem einzigen, effizienten und hochpräzisen Arbeitsgang aneinander registriert werden.

Unter der Annahme, dass die erste und die zweite Bildsequenz von einer automatisch und präzise geführten bildgebenden Vorrichtung aufgenommen wurden, ist es auf diese Weise möglich, kleinste Bewegungen der inneren Organe des Patienten zu erfassen und sichtbar zu machen.

Die räumliche Transformation, welche die erste Punktwolke in die zweite Punktwolke überführt, gibt in diesem Fall die Bewegung von Oberflächenpunkten des sich bewegenden inneren Organs an und ist daher von besonderem medizinischem Interesse.

Gemäß einer weiteren Ausführungsform umfasst das Verfahren daher ferner: i) Ausgeben der in Schritt c) beim Registrieren der dünn besetzten Punktwolken der unterschiedlichen Bildsequenzen bestimmten Transformation, oder Visualisieren der in Schritt c) beim Registrieren der Punktwolken der unterschiedlichen Bildsequenzen bestimmten Transformation auf einer Anzeigevorrichtung, um eine Bewegung eines inneren Organs des Patienten zu visualisieren.

Gemäß einer weiteren Ausführungsform wird das Verfahren in Echtzeit durchgeführt, während die ein oder mehreren Bildsequenzen aufgenommen werden.

Somit ist vorteilhafterweise ein Echtzeit-Feedback für eine menschliche Bedienperson möglich.

Gemäß einer weiteren Ausführungsform ist die bildgebende Vorrichtung eine mobile Ultraschallsonde.

Die mobile Ultraschallsonde kann insbesondere im sogenannten B-Modus betrieben werden, in dem sie 2D-Einzelschnittbilder das Inneren des Körperabschnitts des Patienten liefert, über den sie geführt wird.

Das Registrieren der 2D-Einzelschnitt-Ultraschallbilder durch Bilden von Punktwolken aus den 2D-Einzelschnittbildern und Registrieren der Punktwolken aneinander durch Minimieren einer anhand rasterisierter 3D-Volumina definierten Verlustfunktion erweist sich hierbei als besonders stabil, recheneffizient und gleichzeitig präzise.

Gemäß einer weiteren Ausführungsform wird die räumliche Transformation rasterisiert, um ein mit Helligkeitswerten und Richtungswerten dicht besetztes 3D-Volumen zu erlangen; das mit Helligkeitswerten und normierten Richtungswerten dicht besetzte 3D-Volumen wird einer Glättung unterzogen; das geglättete, mit Helligkeitswerten und Richtungswerten dicht besetzte 3D-Volumen wird interpoliert, um eine regularisierte räumliche Transformation zu erlangen; und das Registrieren erfolgt dergestalt, dass eine Fehlanpassung zwischen der gemäß der regularisierten räumlichen Transformation transformierten ersten Punktwolke und der zweiten Punktwolke möglichst gering ist, durch Minimieren einer Verlustfunktion, die eine Abweichung zwischen zwei rasterisierten, mit Helligkeitswerten dicht besetzten

EP 4 535 285 A2

3D-Volumina angibt, welche durch Rasterisieren der gemäß der regularisierten räumlichen Transformation transformierten ersten Punktwolke und Rasterisieren der zweiten Punktwolke erlangt werden.

Durch die vorgeschlagene Regularisierung durch Rasterisieren, Glätten und Interpolieren der für das Ermitteln der räumlichen Transformation, die insbesondere zum Ermitteln der Verlustfunktion sowie als Ausgabe des Verfahrens verwendet wird, kann vorteilhafterweise die Konvergenz des vorgeschlagenen Verfahrens verbessert werden, Konvergenz auf lokale statt des globalen Minimums kann vermindert oder vermieden werden, und es kann vermieden werden, dass beispielsweise unterschiedliche, parallel verlaufende Gefäße aus der ersten Punktwolke fälschlich einem selben Gefäß in der zweiten Punktwolke zugeordnet wird.

Die räumliche Transformation und die regularisierte räumliche Transformation kann jeweils als ein dünn besetztes Vektorfeld angegeben sein, das für jeden Punkt der ersten dünn besetzten Punktwolke einen Verschiebungsvektor angibt.

Die Helligkeitswerte eines jeweiligen Voxels können als Angabe einer Punktdichte in dem jeweiligen Voxel aufgefasst werden, und die Richtungswerte können als mittlere Länge der Verschiebungsvektoren in der x-, y- und z-Richtung aufgefasst werden. Es versteht sich, dass die Richtungswerte, ähnlich wie die Helligkeitswerte, Gleitkommawerte zwischen 0 und 1 und/oder ganzzahlige Werte zwischen 0 und einer hohen Ganzzahl wie 16, 256, 65536 usw. sein können, d.h. einen beliebigen Wert zwischen einem niedrigsten Richtungswert, einem höchsten Richtungswert und mehreren Zwischenwerten zwischen dem niedrigsten Richtungswert und dem höchsten Richtungswert annehmen können.

Insbesondere können die Richtungswerte des mit Helligkeitswerten und Richtungswerten dicht besetzten 3D-Volumens anhand der zugehörigen Helligkeitswerte normiert werden, bevor das Glätten und das Interpolieren erfolgt.

Weiterhin wird ein Computerprogrammprodukt vorgeschlagen, welches Befehle umfasst, die bei der Ausführung des Programms durch einen mit einer bildgebenden Vorrichtung kommunikationsverbundenen oder in diese integrierten Computer den Computer dazu veranlassen, das vorstehend beschriebene Verfahren auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für das vorgeschlagene Verfahren beschriebenen Ausführungsformen, Merkmale und Vorteile gelten für das vorgeschlagene Computerprogrammprodukt entsprechend.

Weiterhin wird eine Vorrichtung zum Registrieren mehrerer 2D-Einzelbilder eines Patienten in einem gemeinsamen 3D-Koordinatensystem vorgeschlagen. Die Vorrichtung umfasst: a) eine erste Einheit, die dazu eingerichtet ist, von einer bildgebenden Vorrichtung eine oder mehrere Bildsequenzen aus jeweils mehreren, mit der bildgebenden Vorrichtung an unterschiedlichen Positionen entlang eines Körperabschnitts eines Patienten aufgenommenen zweidimensionalen Einzelschnittbildern zu erlangen; b) eine zweite Einheit, die dazu eingerichtet ist, die folgenden Schritte für je-des der mehreren 2D-Einzelschnittbilder durchzuführen: b.1) Bestimmen einer Anzahl 2D-Konturen jeweiliger anatomischer und/oder geometrischer Strukturen in dem 2D-Einzelschnittbild, b.2) Bestimmen einer dünn besetzten Punktwolke mit mehreren Oberflächenpunkten auf jeder der 2D-Konturen, b.3) Positionieren und Orientieren der dünn besetzten Punktwolke in dem gemeinsamen 3D-Koordinatensystem anhand einer bekannten, gemessenen oder geschätzten Position und Orientierung des 2D-Einzelschnittbilds; c) eine dritte Einheit, die eingerichtet ist zum Registrieren einer aus einer oder mehreren der dünn besetzten Punktwolken gebildeten ersten Punktwolke an einer aus einer oder mehreren der dünn besetzten Punktwolken gebildeten zweiten Punktwolke durch Bestimmen einer räumlichen Transformation, welche die erste Punktwolke dergestalt in die zweite Punktwolke überführt, dass eine Fehlanpassung zwischen der gemäß der räumlichen Transformation transformierten ersten Punktwolke und der zweiten Punktwolke möglichst gering ist, durch Minimieren einer Verlustfunktion, die eine Abweichung zwischen zwei rasterisierten, mit Helligkeitswerten dicht besetzten 3D-Volumina angibt, welche durch Rasterisieren der gemäß der räumlichen Transformation transformierten ersten Punktwolke und Rasterisieren der zweiten Punktwolke erlangt werden.

Auf gleiche Weise wie bei dem computerimplementierten Verfahren kann das Erlangen der Bildsequenz durch die erste Einheit umfassen, dass die erste Einheit Befehle an die bildgebende Vorrichtung und/oder an eine die bildgebende Vorrichtung automatisch führende mechanische Vorrichtung ausgibt und/oder menschenlesbare Anweisungen oder Sprachbefehle an eine menschliche Bedienperson ausgibt.

Die für das vorgeschlagene Verfahren beschriebenen Ausführungsformen und Merkmale und Vorteile gelten für die vorgeschlagene Vorrichtung entsprechend. Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1    zeigt eine funktionale Konfiguration einer Vorrichtung und eines Systems gemäß Ausführungsbeispielen der Erfindung;

Fig. 2    veranschaulicht Schritte eines Verfahrens gemäß Ausführungsbeispielen der Erfindung;

Fig. 3    zeigt schematisch einen Anwendungsfall gemäß einem ersten Ausführungsbeispiel;

Fig. 4    veranschaulicht ein 2D-Ultraschall-Einzelschnittbild;

Fig. 5    veranschaulicht positionierte und orientierte Punktwolken;

Fig. 6    veranschaulicht die aneinander registrierten Punktwolken;

Fig. 7    zeigt schematisch einen Anwendungsfall gemäß einem zweiten Ausführungsbeispiel;

Fig.8    veranschaulicht positionierte und orientierte Punktwolken aus mehreren Sweeps; und

Fig. 9    veranschaulicht einen Schnitt eines rasterisierten, mit Helligkeitswerten dicht besetzten 3D-Volumens.

In den Figuren sind gleiche oder funktionsgleiche Elemente mit denselben Bezugszeichen versehen worden, sofern nichts anderes angegeben ist.

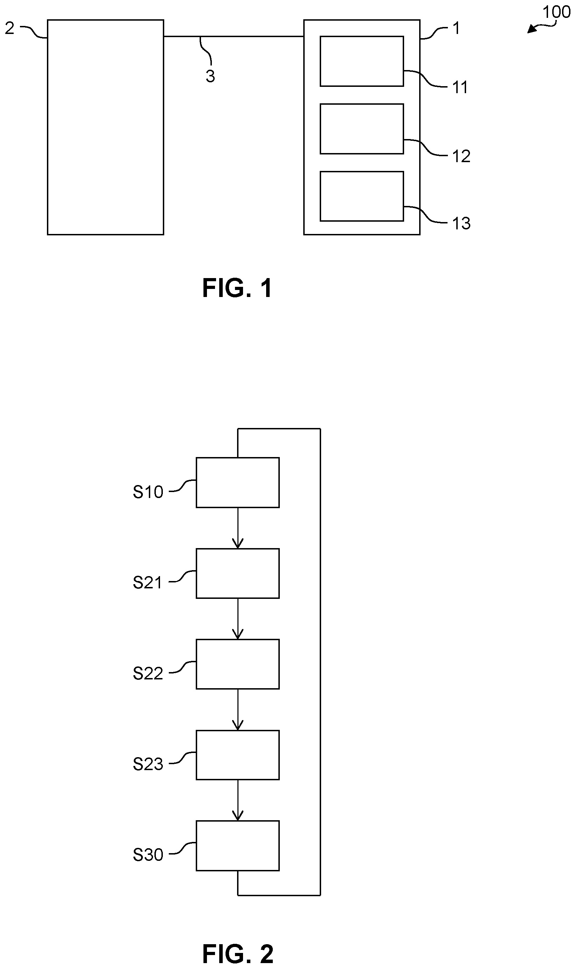

Fig. 1 zeigt eine funktionale Konfiguration einer Vorrichtung 1 und eines Systems 100 gemäß Ausführungsbeispielen der Erfindung und Fig. 2 veranschaulicht Schritte eines Verfahrens gemäß Ausführungsbeispielen der Erfindung.

Das System 100 umfasst eine computerisierte Vorrichtung 1 und eine bildgebende Vorrichtung 2, die über eine Kommunikationsstrecke 3 miteinander kommunikationsverbunden sind. Die computerisierte Vorrichtung 1 bildet, wenn ein Computerprogrammprodukt auf einem nicht dargestellten Prozessor der computerisierten Vorrichtung 1 ausgeführt wird, mehrere Einheiten 11 bis 13 aus, welche im Betrieb die computerisierte Vorrichtung 1 dazu veranlassen, das in Fig 2. veranschaulichte Verfahren mit den Schritten S10-S30 gemäß Ausführungsbeispielen der Erfindung auszuführen.

Zur besseren Veranschaulichung und rein beispielhaft wird das vorgeschlagene Verfahren im Folgenden anhand eines in Fig. 2 visualisierten Anwendungsfalls gemäß einem ersten Ausführungsbeispiel erläutert.

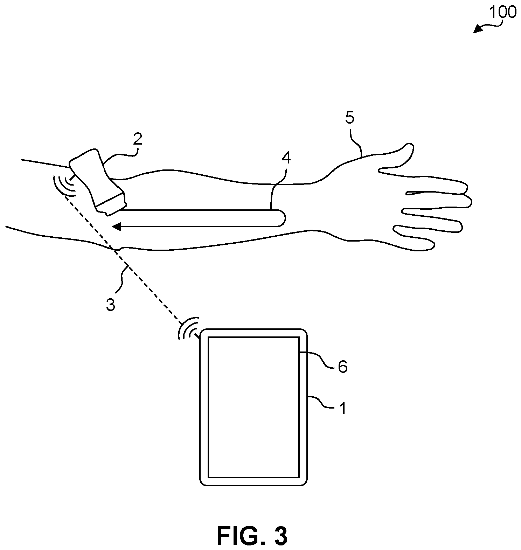

Fig. 3 zeigt schematisch einen Anwendungsfall gemäß einem ersten Ausführungsbeispiel. Es wird weiter auch auf Fig. 1 und Fig. 2 Bezug genommen.

In dem ersten Ausführungsbeispiel ist die bildgebende Vorrichtung 2 eine mobile Ultraschallsonde 2, und die computerisierte Vorrichtung 1 ist ein Tablet-PC 1, der über eine drahtlose Kommunikationsstrecke 3 mit der Ultraschallsonde 2 kommunikationsverbunden ist.

In Schritt S1 des vorgeschlagenen Verfahrens weist die erste Einheit 11 des Tablet-PCs 1 eine menschliche Bedienperson (nicht gezeigt) dazu an, die mobile Ultraschallsonde 2 entlang einer vorgegebenen Trajektorie 4 an einem Unterarm 5 (Beispiel für einen Körperabschnitt) eines Patienten entlang zu führen. Eine vollständige Bewegung entlang der vorgegebenen Trajektorie 4 wird dabei auch als ein Ultraschall-Sweep bezeichnet.

Die erste Einheit 11 kann beispielsweise auf einer Anzeige 6 des Tablets die vorgegebene Trajektorie 4 bzw. eine konzeptuelle Darstellung der vorgegebenen Trajektorie 4 und des Körperabschnitts 5 des Patienten anzeigen oder eine Sprachnachricht ausgeben, um die menschliche Bedienperson entsprechend anzuweisen.

Die Ultraschallsonde 2D des vorliegenden Beispiels wird im B-Mode betrieben, in welchem die Ultraschallsonde 2D kontinuierlich 2D-Einzelschnittbilder, sogenannte B-Scans, des Unterarms 5 des Patienten liefert.

Die erste Einheit 11 erfasst die von der Ultraschallsonde 2 gelieferten 2D-Einzelschnittbilder und speichert sie in Assoziation mit einem Zeitstempel, der einen Zeitpunkt der Aufnahme des 2D-Einzelschnittbilds angibt.

In dem Maße, wie die erste Einheit 11 2D-Einzelschnittbilder des Körperabschnitts 5 des Patienten erfasst, führt die zweite Einheit 12 des Tablet-PCs 1 für jede der erfassten 2D-Einzelschnittbilder die Schritte S21 bis S23 des vorgeschlagenen Verfahrens aus, die im Folgenden beschrieben werden.

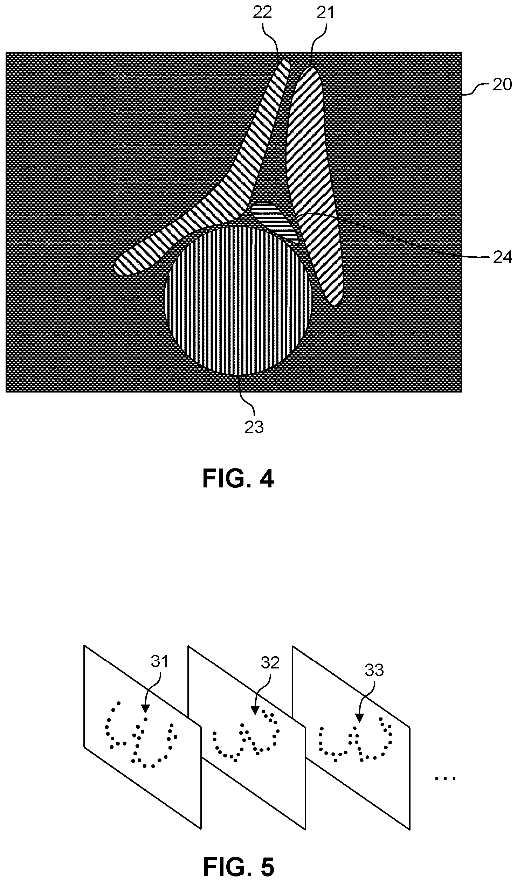

Fig. 4 veranschaulicht ein 2D-Ultraschall-Einzelschnittbild 20. Es wird weiterhin auch auf Fig. 1 bis Fig. 3 Bezug genommen.

Das von der 2D-Ultraschallsonde 2 aufgenommene Ultraschallbild 20 weist Bereiche unterschiedlicher Helligkeit auf, wobei eine Bildhelligkeit in dem Ultraschallbild 20 ein Maß für die Reflektivität des abgetasteten Gewebes ist. Unterschiedliche anatomische Strukturen können somit an einem Helligkeitsunterschied erkannt werden. Eine medizinisch ausgebildete Expertenperson kann in einem derartigen Ultraschallbild 20 anatomische Strukturen erkennen und identifizieren.

In Schritt S21 bestimmt die zweite Einheit 12 automatisch für das jeweilige 2D-Einzelschnittbild 20 eine Anzahl von Konturen 21, 22, 23 von anatomischem oder geometrischen Strukturen in dem Ultraschallbild 20. Hierzu bedient sich die zweite Einheit 12 beispielsweise eines trainierten neuronalen Faltungsnetzwerks (nicht gezeigt).

Das trainierte neuronale Faltungsnetzwerk kann mittels überwachten Lernens trainiert worden sein: Hierbei werden dem neuronalen Faltungsnetzwerk eine Vielzahl von an Patienten aufgenommenen 2D-Einzelschnittbilder als Trainings-Eingangsdaten und von medizinischen Expertenpersonen vorgenommene Multi-Label-Segmentierungen dieser Bilder als Trainings-Ausgangsdaten vorgelegt und in einem Trainingsverfahren Parameter der Neuronen des neuronalen Faltungsnetzwerks angepasst, bis die Vorhersagen des neuronalen Faltungsnetzwerks gut mit den von den medizinischen Expertenpersonen vorgenommenen Multi-Label-Segmentierungen übereinstimmen.

Eine Multi-Label-Segmentierung bezeichnet ein oder mehrere anatomische Strukturen in dem 2D-Einzelschnittbild 20 und weist jeder dieser Strukturen ein Label zu, wie beispielsweise eine Zahl oder ein Kennzeichen, das bezeichnet, um was für eine anatomische Struktur es sich handelt und/oder die eine Struktur von anderen Strukturen abgrenzt.

Die Multi-Label-Segmentierung kann beispielsweise durch Einfärben des 2D-Einzelschnittbilds mit einer unterschiedlichen Farbe für jeden der Label erfolgen. Die zweite Einheit 12 kann in diesem Falle die Konturen der solchermaßen eingefärbten anatomischen Strukturen mit einem aus der Pixelbildbearbeitung bekannten Verfahren ermitteln.

Sodann führt die zweite Einheit 12 in Schritt S22 eine spärliche Abtastung jeder der in Schritt S21 ermittelten Konturen durch und gewinnt auf diese Weise eine dünn besetzte Punktwolke, die für jede der 2D-Konturen mehrere Oberflächenpunkte auf der jeweiligen 2D-Kontur umfasst. Die spärliche Abtastung kann äquidistant erfolgen, oder an charakteristischen Abschnitten der 2D-Kontur, wie etwa in Abschnitten mit hoher Krümmung, können die Oberflächenpunkte dichter abgetastet werden als an anderen Abschnitten, wie etwa an i.W. geradlinigen Abschnitten.

Die solchermaßen in Schritt S22 bestimmte Punktwolke mit Oberflächenpunkten auf den in Schritt S21 bestimmten 2D-Konturen wird anschließend in Schritt S23 im dreidimensionalen Raum, das heißt Koordinatenraum, der für alle Schritte des Verfahrens und für alle basierend auf einem beliebigen der 2D-Einzelschnittbilder 20 ermittelten Punktwolken gemeinsam verwendet wird, vorläufig positioniert und orientiert.

Fig. 5 veranschaulicht mehrere - anhand mehrerer 2D-Einzelschnittbilder 20 erlangte - Punktwolken 31, 32, 33, die im 3D-Raum vorläufig orientiert und positioniert sind. Es wird weiter auch auf Fig. 1 bis 4 Bezug genommen.

Im vorliegenden Ausführungsbeispiel ist die in Schritt S23 durchgeführte Positionierung und Orientierung der Punktwolken 31, 32, 33 eine vorläufige Positionierung und Orientierung der Punktwolken, da die genaue Position und Orientierung der 2D-Ultraschallsonde 2 zum Zeitpunkt des Erfassens der jeweiligen 2D-Einzelschnittbilder 20 unbekannt ist. Die zweite Einheit 12 schätzt daher in Schritt 23 die Position und Orientierung der 2D-Ultraschallsonde 2 zum Zeitpunkt des Erfassens des betreffenden 2D-Einzelschnittbilds 20 anhand des Zeitstempels, der den Zeitpunkt des Erfassens des 2D-Einzelschnittbilds 20 angibt, und anhand der vorgegebenen Trajektorie 4, die in Schritt S11 angewiesen wurde. Wie in Fig. 5 für die Punktwolke 32 angedeutet, kann dies dazu führen, dass einige der Punktwolken 32 zunächst nicht "richtig" im 3D-Raum positioniert und orientiert werden.

Es sei angemerkt, dass gemäß vorteilhaften Weiterbildungen die 2D-Ultraschallsonde 2 beispielsweise einen GPS-Sensor, einen Gyrosensor, einen Beschleunigungssensor und andere derartige Sensoren aufweisen kann, und dass Messwerte der genannten Sensoren über die Kommunikationsverbindung 3 an den Tablet-PC 1 bereitgestellt werden können. Anhand dieser Messwerte kann die zweite Einheit 12 in Schritt S23 auch die gemessene Position und Orientierung der 2D-Ultraschallsonde 2 verwenden, um die Punktwolken 31, 32, 33 im 3D-Raum zu positionieren. Auch in diesem Fall kann sich jedoch aufgrund von Messunsicherheiten noch eine gewisse Fehlanpassung ergeben.

In Schritt S30 registriert daher die dritte Einheit 13 des Tablet-PCs die mehreren Punktwolken 31, 32, 33 aneinander. Nachfolgend wird beispielhaft die Registrierung der Punktwolke 32 an der Punktwolke 33 betrachtet, es versteht sich jedoch, dass die Registrierung nach demselben Verfahren wiederholt mit anderen Punktwolken, beispielsweise für die Registrierung der Punktwolke 31 an der Punktwolke 32, durchgeführt werden kann.

Im Speziellen bestimmt die dritte Einheit 13 eine räumliche Transformation $\psi$, welche die Punktwolke 32, nachfolgende auch als erste Punktwolke 32 oder $S$ bezeichnet, dergestalt in die Punktwolke 33, nachfolgend auch als zweite Punktwolke 33 oder $T$ bezeichnet, überführt, dass eine verbleibende Fehlanpassung zwischen der gemäß der bestimmten räumlichen Transformation transformierten ersten Punktwolke $S_\psi$ und der zweiten Punktwolke 33, $T$ möglichst gering ist.

Hierbei sei angemerkt, dass durch das in Schritt S21 erfolgte vorläufige Positionieren und Orientieren der Punktwolken 31, 32, 33 bereits eine erste, geschätzte, räumliche Transformationsvorschrift gewählt ist: nämlich Translation entlang der vorgegebenen Trajektorie ohne Rotation relativ zu der vorgegebenen Trajektorie. Diese anfänglich gewählte räumliche Transformation $\psi$ kann, wie in Fig. 5 angedeutet, zu einer erheblichen Fehlanpassung führen.

Die dritte Einheit 13 bestimmt demgemäß eine räumliche Transformation $\psi$, die zu einer möglichst geringen Fehlanpassung führt; auf das hierzu verwendete Verfahren wird später noch genauer eingegangen.

Wenn diese Transformation $\psi$ bestimmt worden ist, gelten die Punktwolken 31, 32, 33 als aneinander registriert. Die bestimmte räumliche Transformation $\psi$ zwischen den Punktwolken 31, 32 stellt eine Information dar, in der diverse technische Effekte immanent sind.

Beispielsweise können gemäß einer vorteilhaften Ausgestaltung die Punktwolken 31, 32, 33 gemäß der bestimmten räumlichen Transformation $\psi$ repositioniert werden, das heißt, die Positionen und Orientierungen der Punktwolken 31, 32, 33 können dergestalt korrigiert werden, dass sie die bestimmte räumliche Transformation $\psi$ beschreiben.

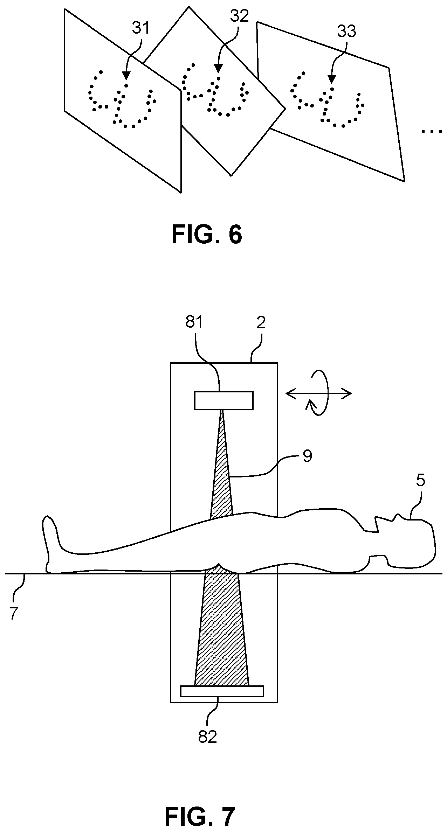

Fig. 6 veranschaulicht die solchermaßen aneinander registrierten Punktwolken 31, 32, 33 mit den korrigierten Positionen und Orientierungen. Es wird weiter auch auf Fig. 1 bis 3 Bezug genommen.

Die Punktwolken 31, 32, 33 mit den korrigierten Positionen und Orientierungen können auf der Anzeige 6 des Tablets-PC 1 visualisiert werden. Hierbei können unmittelbar die einzelnen Oberflächenpunkte der Punktwolken 31, 32, 33 dreidimensional visualisiert werden. Denkbar ist jedoch auch, dass die Punktwolken 31, 32, 33 mit den korrigierten Positionen und Orientierungen nach einem nachstehend beschriebenen Verfahren rasterisiert werden und ein rasterisiertes fusioniertes 3D-Gesamtvolumen, das durch Rasterisieren der Punktwolken 31, 32, 33 mit den korrigierten Positionen und Orientierungen gewonnen wurde, kann auf der Anzeige 6 des Tablet-PC 1 visualisiert werden. Denkbar ist auch, dass die mehreren aufgenommenen 2D-Einzelschnittbilder 20 selbst gemäß den korrigierten Positionen und Orientierungen positioniert und orientiert und sodann gemeinsam auf der Anzeige 6 in einer 3D-Ansicht dargestellt werden.

Gemäß einer anderen vorteilhaften Weiterbildung kann die in Schritt S30 bestimmte räumliche Transformation $\psi$ benutzt werden, um die von der 2D-Ultraschallsonde 2 tatsächlich vollführte Trajektorie zu beurteilen. Eine (nicht dargestellte) vierte Einheit des Tablets-PCs 1 kann die tatsächlich vollführte Trajektorie anhand der bestimmten räumlichen Transformationen $\psi$ zwischen den Punktwolken 31, 32, 33 rekonstruieren und die rekonstruierte Trajektorie mit der in Schritt S1 vorgegebenen Trajektorie 4 vergleichen. Weichen die Trajektorien um mehr als einen vorbestimmten Schwellwert voneinander ab, oder lässt sich in Schritt S30 keine hinreichend geringe Fehlanpassung erreichen, so kann die vierte Einheit bestimmen, dass die menschliche Bedienperson zu weit von der vorgegebenen Trajektorie 4 abgewichen ist. In diesem Fall kann die vierte Einheit des Tablet-PC 1 ein akustisches oder visuelles Signal an die menschliche Bedienperson ausgeben, das diese auffordert, die Position der 2D-Ultraschallsonde 2 zu korrigieren und/oder den Sweep zu wiederholen. Die vierte Einheit kann auch entscheiden, die in dem aktuellen Sweep erfassten 2D-Einzelschnittbilder 20 und/oder die für den aktuellen Sweep bestimmten Punktwolken 31, 32, 33 zu verwerfen, so dass diese keiner weiteren Verarbeitung zugeführt und insbesondere nicht visualisiert werden.

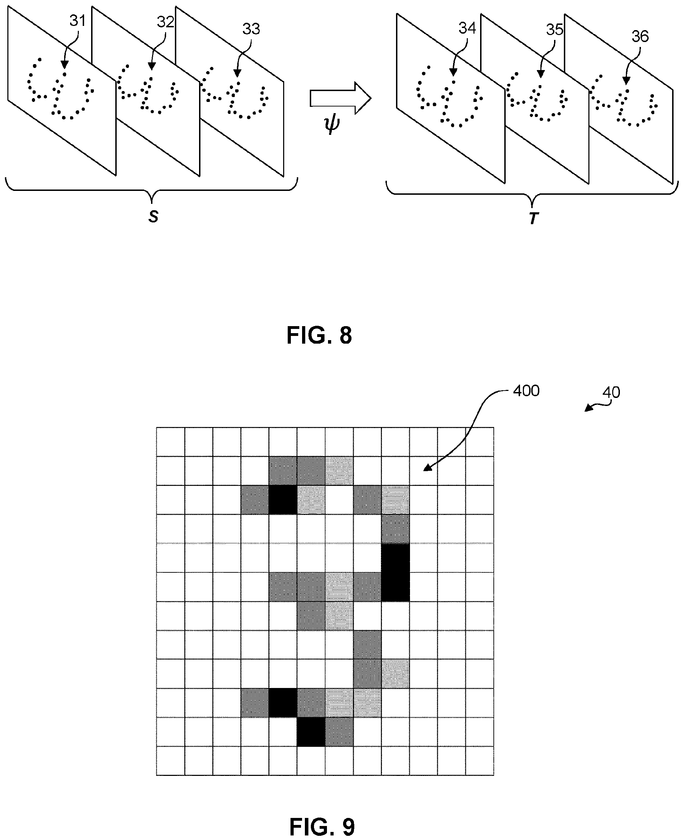

Fig. 7 veranschaulicht schematisch einen Anwendungsfall gemäß einem zweiten Ausführungsbeispiel, und Fig. 8 veranschaulicht positionierte und orientierte Punktwolken 31-36 aus mehreren Sweeps gemäß dem weiteren Ausführungsbeispiel. Es wird auf Fig. 8, 7, 1 und 2 Bezug genommen.

In der Beschreibung des zweiten Ausführungsbeispiels tragen gleiche oder funktionsgleiche Elemente gleiche Bezugszeichen, und die Beschreibung konzentriert sich auf Unterschiede zum ersten Ausführungsbeispiel.

Gemäß dem zweiten Ausführungsbeispiel ist die bildgebende Vorrichtung 2 ein Computertomographie-Scanner. Der CT-Scanner 2 ist torusförmig und ein Patient liegt auf einem Tisch 7 und ist in eine offene Mitte des torusförmigen CT-Scanners 2 eingeführt. Der CT-Scanner 2 weist einen Röntgensender 81 und ein Detektorarray 82 auf. Im Betrieb sendet der Röntgensender 81 einen Röntgenstrahl 9 aus, der einen Abschnitt 5 des Körpers des Patienten durchdringt und von dem Detektorarray 82 registriert wird. Während eines jeweiligen Sweeps rotieren der CT-Scanner (der Röntgensender 81 und das Detektorarray 82) um eine Körperachse des Patienten und vollführen eine Translationsbewegung entlang der Körperachse des Patienten.

Die computerisierte Vorrichtung 1 des zweiten Ausführungsbeispiels kann ein (in Fig. 7 nicht gezeigter) Bediencomputer des CT-Scanners 2 sein.

Der CT-Scanner 2 liefert auf ähnliche Weise wie die Ultraschallsonde 2 (Fig. 2) während eines Sweeps entlang des Körpers 5 des Patienten eine Serie von 2D-Einzelschnittbildern (20 in Fig. 3), wobei eine Bildhelligkeit der 2D-Einzelschnittbilder (20 in Fig. 3) umgekehrt proportional zur Menge der durch den Körper 5 transmittierten Röntgenstrahlung ist. In diesen 2D-Einzelschnittbildern (20 in Fig. 3) lassen sich auf gleiche Weise wie für das erste Ausführungsbeispiel beschrieben anatomische Strukturen des Patienten 5, beispielsweise Knochen und innere Organe wie Herz oder Lunge und dergleichen, identifizieren.

Anders als die handgeführte Ultraschallsonde 2 (Fig. 2) beim ersten Ausführungsbeispiel wird der CT-Scanner 2 des zweiten Ausführungsbeispiels maschinell und hochpräzise geführt. In Schritt S21 des vorgeschlagenen Verfahrens können daher die Punktwolken 31-36 korrekt und beispielsweise auch direkt endgültig positioniert und orientiert werden. Hierbei zeigen in Fig. 8 die Bezugszeichen 31, 32, 33 Punktwolken einer ersten Bildsequenz, die während eines ersten CT-Scans aufgenommen wurden, und die Bezugszeichen 34, 35, 36 zeigen Punktwolken, die während eines zweiten CT-Scans an demselben Körperabschnitt 5 desselben Patienten aufgenommen wurden und eine zweite Bildsequenz bilden.

Auf ähnliche Weise, wie für das erste Ausführungsbeispiel beschrieben, kann optional zur Verbesserung der Bildqualität eine Registrierung aufeinanderfolgender Punktwolken 31-33 und 34-36 innerhalb einer jeweiligen der Bildsequenzen erfolgen und die Positionen der Punktwolken 31-33 und 34-36 können gemäß den bestimmten räumlichen Transformationen korrigiert werden. Dies kann jedoch auch unterbleiben.

Gemäß dem zweiten Ausführungsbeispiel besteht vor allem ein Interesse dran, Bewegungen von inneren Organen des Patienten zu visualisieren, wie etwa eine Atmungsbewegung einer Lunge oder ein schlagendes Herz.

Gemäß dem zweiten Ausführungsbeispiel werden daher mehrere Bildsequenzen aufgenommen, indem mehrere CT-Scans durchgeführt werden, und in jedem der CT-Scans werden gemäß Schritt S1 mehrere 2D-Einzelschnittbilder 20 aufgenommen und gemäß Schritten S21-S23 werden mehrere entsprechende dünn besetzte Punktwolken 31-33 (erste Bildsequenz) und 34-36 (zweite Bildsequenz) bestimmt, positioniert und orientiert. Sodann erfolgt in Schritt S30 eine Registrierung einer, mehrerer oder aller der dünn besetzten Punktwolken 31-33 der ersten Bildsequenz an einer, mehrerer oder aller der dünn besetzten Punktwolken 34-36 der zweiten Bildsequenz.

Für die nachfolgende Beschreibung wird hierfür angenommen, dass die eine, mehreren oder allen der dünn besetzten Punktwolken 31-33 der ersten Bildsequenz zu einer ersten Punktwolke $S$ (engl. "source") zusammengefasst werden, und dass die eine, die mehreren oder alle der dünn besetzten Punktwolken 31-33 der zweiten Bildsequenz zu einer zweiten Punktwolke $T$ (engl. "target") zusammengefasst werden.

Das heißt, in Schritt S30 bestimmt die dritte Einheit 13 nach dem nachstehend genauer beschriebenen Verfahren eine Transformation $\psi$, welche die erste Punktwolke $S$ mit der geringstmöglichen Fehlanpassung in die zweite Punktwolke $T$ überführt. Die solchermaßen bestimmte räumliche Transformation $\psi$ kann als ein Vektorfeld aufgefasst werden, dass für jeden Punkt der ersten Punktwolke eine Translation angibt, die diesen bestmöglich zu einem (nicht notwendigerweise in der zweiten Punktwolke $T$ enthaltenen) Punkt auf einer von der zweiten Punktwolke $T$ dargestellten Kontur überführt. Dies kann im zweiten Ausführungsbeispiel so aufgefasst werden, dass das Vektorfeld der bestimmten räumlichen Translationen die Bewegung konkret markierter Punkte auf einer Oberfläche eines inneren Organs des Patienten 5 während des Zeitraums zwischen dem Scannen der ersten Bildsequenz und dem Scannen der zweiten Bildsequenz darstellt.

Die solchermaßen bestimmte räumliche Transformation $\psi$ ist daher von medizinischem Interesse und kann auf einer Anzeige 6 der computerisierten Vorrichtung 1 visualisiert oder an eine weitere computerisierte Vorrichtung (nicht gezeigt) zur Speicherung oder sonstigen Weiterverarbeitung ausgegeben werden.

Details zum Schritt des Registrierens der Punktwolken aneinander

Die nachstehenden Beschreibungen des Verfahrensschritts S30 zur Registrierung einer ersten Punktwolke $S$ an einer zweiten Punktwolke $T$ sind für alle Ausführungsbeispiele gültig und gelten insbesondere auch für die beiden vorstehend anhand des ersten Ausführungsbeispiels und des zweiten Ausführungsbeispiels beschriebenen Anwendungsfälle.

Gegeben sei eine erste dünn besetzte Punktwolke $S \in \mathbb{R}^{N_s \times 3}$ und eine zweite dünn besetzte Punktwolke $T \in \mathbb{R}^{N_t \times 3}$. Jede der Punktwolken $S$ und $T$ umfasst eine beliebige Anzahl $N_s$, $N_t$ von Oberflächenpunkten, die jeweils durch 3D-Koordinaten angegeben sind. In Schritt S30 (Fig. 1) soll nun diejenige Transformation bestimmt werden, die die erste Punktwolke $S$ mit geringstmöglicher Fehlabstimmung an der zweiten Punktwolke $T$ ausrichtet. Diese Transformation lässt sich als dünn besetztes Verschiebungsfeld $\psi \in \mathbb{R}^{N_s \times 3}$ notieren.

Wohingegen das erste Ausführungsbeispiel, lediglich zu Anschauungszwecken, im Wesentlichen als eine starre Registrierung beschrieben wurde, bei der die erste Punktwolke 32 (Fig. 5) lediglich gedreht und verschoben wird, um sie mit der zweiten Punktwolke 33 (Fig. 5) in Einklang zu bringen - obwohl keine Einschränkung hierauf besteht -, ermöglicht in der vorgestellten allgemeinen Formulierung die räumliche Transformation $\psi \in \mathbb{R}^{N_s \times 3}$ eine sogenannte deformierbare Registrierung, bei der im Rahmen der Transformation auch die durch die Punkte der jeweiligen Punktwolken $S$, $T$ repräsentierten Konturen nicht nur verschoben und verdreht, sondern auch deformiert werden können. Dies ist im zweiten Ausführungsbeispiel von besonderem Interesse, da anatomische Strukturen wie atmende Lungen oder schlagende Herzen hochgradig deformierbar sind.

Im Allgemeinen besteht keine Eins-zu-Eins-Korrespondenz zwischen den Punktwolken $S$ und $T$, so dass die Aufgabe, das dünn besetzte Verschiebungsfeld $\psi$ zu bestimmen, das die transformierte Punktwolke $S + \psi$ bestmöglich mit $T$ in Übereinstimmung bringt, als Regressionsaufgabe gestellt ist. Das heißt, die räumliche Transformation, also das Verschiebungsfeld $\psi$ soll dergestalt ermittelt werden, dass eine Verlustfunktion $L(S + \psi, T)$, die eine Fehlabstimmung zwischen der transformierten Punktwolke $S_\psi = S + \psi$ und der Punktwolke $T$ angibt, minimiert wird.

Die in der Beschreibungseinleitung erwähnten und weitere Vorarbeiten, die versuchen, die Transformation $\psi \in \mathbb{R}^{N_s \times 3}$ auf numerischem Wege oder durch Einsatz neuronaler Netzwerke anhand der 3D-Koordinaten der Punktwolken $S$ und $T$ zu ermitteln, sind rechenintensiv, funktionieren nur für eine bestimmte Klasse von bekannten anatomischen Strukturen, für die jeweils ein spezielles Training erforderlich ist, oder erzeugen vergleichsweise hohe Registrierungsfehler. Insbesondere bei stark deformierbaren Strukturen wie atmenden Lungen sind die Ergebnisse der Vorarbeiten wenig befriedigend und eher von akademischem denn von praktischem technischen Interesse. Diese Schwierigkeiten mit den Vorarbeiten beruhen unter anderem darauf, dass Irregularitäten der vorhergesagten Transformation zu wenig bestraft werden, und dass Metriken, die einen Abstand zwischen zwei Punktwolken **S** und **T** basierend auf den 3D-Koordinaten der in diesen Punktwolken umfassten Punkte messen, wie etwa der sogenannte Chamfer-Abstand, nicht hinreichend gut in Bezug auf die Verschiebungsvektoren der räumlichen Transformation $\psi$ differenzierbar sind und deswegen nur bedingt geeignet zur Verwendung als Verlustfunktion sind, da eine solche für eine gute Konvergenzbildung ein klares globales Minimum und auf dieses hinweisende Gradienten aufweisen sollte.

Vor diesem Hintergrund wird gemäß Ausführungsbeispielen vorgeschlagen, die zu minimierende Verlustfunktion im Rahmen des Regressionsproblems nicht unmittelbar abhängig von den 3D-Koordinaten der Punkte der Punktwolken **S**, **T** zu definieren, sondern die Verlustfunktion abhängig von voxelisierten, dicht besetzten 3D-Volumina zu definieren, die durch Rasterisieren aus der ersten Punktwolke **S** und der zweiten Punktwolke **T** gewonnen werden.

Fig. 9 veranschaulicht einen 2D-Schnitt durch ein solches mit Helligkeitswerten dicht besetztes, voxelisiertes 3D-Volumen 40. Das 3D-Volumen 40 ist dicht besetzt, das heißt, es ist in Voxel 400 unterteilt, die, außer an Randflächen des 3D-Volumens 40, allseitig aneinander angrenzen, und für jedes Voxel 400 speichert das 3D-Volumen 40 einen Helligkeitswert, der wenigstens die Werte 0 (in Fig. 9 weiß dargestellt) für die Angabe "Voxel ist nicht belegt", 1 (in Fig. 9 schwarz dargestellt) für die Angabe "das Voxel ist maximal bzw. sicher belegt", und mehrere, bevorzugt viele oder wahlfreie, Zwischenwerte zwischen 0 und 1 annehmen kann.

Es sei angemerkt, dass die Helligkeitswerte, wenn 0 der Mindestwert und 1 der Maximalwert sind, als eine Fließkommazahl pro Voxel gespeichert werden können. Alternativ können die Helligkeitswerte auch als eine Ganzzahl pro Voxel gespeichert werden; in diesem Fall ist der Maximalwert ein Wert größer als 2, beispielsweise 256, 8192, 65535 oder $2^{24}$ oder $2^{32}$, und die Zwischenwerte können ganzzahlige Werte zwischen dem Minimalwert und dem Maximalwert sein.

Es wird nun zunächst ein Verfahren angegeben, wie eine Punktwolke S in ein jeweiliges 3D-Volumen 40 überführt werden kann. Die Verfahrensschritte gelten analog auch für die Punktwolken Punktwolke $S_{\psi}$ und **T**. Das vorgestellte Verfahren kann als eine invertierte trilineare Interpolation aufgefasst werden.

Gegeben seien die Koordinaten $\mathbf{p} \in \mathbb{R}^3 = (p_x, p_y, p_z)$ eines jeweiligen Punkts der Punktwolke, und sei $y$ ($\mathbf{p}$) eine Funktion, die 1 angibt, wenn sich an der Koordinate **p** ein Punkt befindet, und 0 andernfalls. Gegeben seien ferner die ganzzahligen Voxelkoordinaten $\mathbf{q} \in \mathbb{N}^3 = (q_x, q_y, q_z)$ eines jeweiligen Voxels, und sei $x(\mathbf{q})$, mit $\mathbf{x} \in \mathbb{R}^{n_x \times n_y \times n_z}$, eine Funktion, die für jede ganzzahlige Voxelkoordinaten q einen reellwertigen Helligkeitswert zwischen 0 und 1 angibt.

Vorgeschlagen wird die Verwendung eines invertierten trilinearen Interpolationskernels der Form

$$\mathrm{G}(\boldsymbol{p},\boldsymbol{q}) = g(p_x, q_x) \cdot g(p_y, q_y) \cdot g(p_z, q_z)$$

mit

$$g(p_{x,y,z}, q_{x,y,z}) = \max(0, 1 - |p_{x,y,z} - q_{x,y,z}|).$$

Das rasterisierte, mit Helligkeitswerten besetzte 3D-Teilvolumen 40 lässt sich dann angeben als Summe über alle Punkte **p** der Punktwolke **S**:

$$x(\boldsymbol{q}) = \sum_{p} G(\boldsymbol{p}, \boldsymbol{q}) \cdot y(\boldsymbol{p})$$

Es sei angemerkt, dass der Term $g(p_y, q_y)$ null wird, wenn die ganzzahligen Voxelkoordinaten q sich in der entsprechenden Raumrichtung x um mehr als einen Gitterabstand von den reellwertigen 3D-Punktkoordinaten **p** unterscheiden, entsprechendes gilt in den Raumrichtungen y und z für $g(p_y, q_y)$ und $g(p_y, q_z)$. Für jedes **q** besteht daher die Summe aus der vorstehenden Formel nur aus wenigen von null verschiedenen Termen.

Das vorgeschlagene Verfahren zum Bestimmen des rasterisierten, mit Helligkeitswerten dicht besetzten 3D-Volumens 40 durch Berechnen von $x(\boldsymbol{q})$ für alle Voxelkoordinaten **q** lässt sich als dünn besetzte Matrixoperation effizient auf einer GPU oder dergleichen implementieren.

Eine wichtige Eigenschaft des vorgeschlagenen Verfahrens zum Rasterisieren der dünn besetzten Punktwolken **S**, **T** besteht darin, dass das resultierende 3D-Volumen 40, $x(\boldsymbol{q})$, nach den 3D-Koordinaten **p** der zugehörigen Punktwolke **S**, **T** differenzierbar ist. Anders ausgedrückt ändern sich, wenn die 3D-Koordinaten **p** eines der Punkte allmählich variiert wird, die Helligkeitswerten **x(q)** ebenso allmählich, das heißt stetig und differenzierbar. Hierdurch unterscheiden sich die von den Ausführungsbeispielen verwendeten rasterisierten 3D-Volumina 40 von sogenannten Occupancy Grids aus dem Stand der Technik, die lediglich einen binären Wert "belegt" oder "nicht belegt" angeben, welcher zunächst unverändert bleibt und dann "plötzlich springt", wenn die 3D-Koordinaten eines Punkts um mehr als einen bestimmten Betrag verändert werden, so dass solche Occupancy Grids nicht stetig differenzierbar sind.

Die Verlustfunktion $L(S_\psi, T)$ wird nun abhängig von den aus der gemäß der transformierten Punktwolke $S_\psi = S + \psi$ und aus der Punktwolke T rasterisierten 3D-Volumina 40 definiert.

Sei $i = [0 \dots n\text{-}1]$ ein Index der Voxel 400 des jeweiligen 3D-Volumens 40, wobei n die Gesamtzahl der Voxel 400 des jeweiligen 3D-Volumens 40 ist, und sei $a_i$ der Helligkeitswert im i-ten Voxel der transformierten ersten Punktwolke $S_\psi$ und $b_i$ der Helligkeitswert im i-ten Voxel der zweiten Punktwolke $T$.

Dann kann die Verlustfunktion $L(S_\psi, T)$ gemäß einer vorteilhaften Ausgestaltung geschrieben werden als:

$$L\big(S_\psi, T\big) \;=\; L(S + \psi, T) \;=\; L(a, b) \;=\; \sum_i |a_i - b_i|$$

Diese Verlustfunktion ist eine monoton ansteigende Abstandsfunktion, die als Summe von Abständen zwischen den Helligkeitswerten korrespondierender Voxel der beiden 3D-Volumina 40 definiert ist.

Es ist jedoch gemäß einer bevorzugten Weiterbildung auch denkbar, die Huber-Norm als Verlustfunktion zu verwenden, die wie folgt definiert ist:

$$L\big(S_\psi, T\big) \;=\; L(S + \psi, T) \;=\; L_{\mathrm{H}}(a, b) \;=\; \sum_i l_{\mathrm{H}}(a_i, b_i)$$

mit

$$l_{\mathrm{H}}(a_i, b_i) = \begin{cases} \dfrac{1}{2\beta}(a_i - b_i)^2 & \text{falls} \quad |a_i - b_i| < \beta \\[2ex] |a_i - b_i| - \dfrac{1}{2\beta} & \text{andernfalls} \end{cases}$$

Hierbei ist $\beta$ ein wahlfreier Parameter, dessen genauer Wert in einfachen Versuchsläufen geeignet gewählt werden kann.

Die Huber-Norm ist bei geringen Abständen zwischen den Helligkeitswerten korrespondierender Voxel quadratisch; bei größeren Abständen verläuft sie linear. Auf diese Weise kann ein besseres Konvergenzverhalten eines numerischen Verfahrens oder eines unüberwachten Lernens unter Verwendung der Verlustfunktion erreicht werden, da die Verlustfunktion mit zunehmend geringer Fehlabstimmung immer weiter abflacht, so dass ein Überschießen über das wahre Minimum vermieden wird, und die Verlustfunktion auch bei großen Fehlabstimmungen nicht zu übermäßig steilen Gradienten führt.

Die auf der Huber-Norm basierende Verlustfunktion ist eine monoton ansteigende Abstandsfunktion, die als Summe eines von Abständen zwischen den Helligkeitswerten korrespondierender Voxel der beiden 3D-Volumina 40 abhängigen Terms definiert ist.

Es sei angemerkt, dass die beiden vorstehend beschriebenen vorgeschlagenen Verlustfunktionen nach den Verschiebungsvektoren der räumlichen Transformation $\psi$ differenzierbar sind, da die zugrundeliegenden 3D-Volumina 40 nach den Ortskoordinaten der Punkte der zugehörigen Punktwolken $S$, $S_\psi$, $T$ differenzierbar sind. Somit eignen sich auf solche Weise anhand der rasterisierten 3D-Volumina 40 definierten vorgeschlagenen Verlustfunktionen für gradientenbasierte Verfahren oder als Belohnungsfunktionen bei unüberwachtem Lernen.

Ein gradientenbasiertes Verfahren zum Bestimmen der räumlichen Transformation $\psi$, die die (jeweilige) erste Punktwolke $S$ in die zweite Punktwolke $T$ überführt, zur Verwendung in Schritt S30, kann wie folgt angegeben werden: Eingangs wird die zweite Punktwolke $T$(Ziel-Punktwolke) nach dem vorstehend beschriebenen Verfahren rasterisiert, um ein rasterisiertes, mit Helligkeitswerten dicht besetztes 3D-Volumen 40 (zweites 3D-Volumen 40, Ziel-3D-Volumen) zu erhalten.

Sodann wird eine anfängliche räumliche Transformation (Kandidaten-Transformation) $\psi$ bestimmt. Als anfänglicher Kandidat kann beispielsweise im ersten Ausführungsbeispiel die durch die anfänglich positionierten und orientierten Punktwolken 31-33 (Fig. 5) definierte Transformation gewählt werden. Im zweiten Ausführungsbeispiel kann rein beispielhaft eine Transformationsvorschrift, die einen Schwerpunkt der ersten Punktwolke $S$ in einen Schwerpunkt der zweiten Punktwolke $T$ überführt, als anfänglicher Kandidat verwendet werden. Andere anfängliche Kandidaten sind denkbar.

Sodann wird die gemäß der räumlichen Transformation $\psi$ transformierte Punktwolke $S_\psi$, nach dem vorstehend beschriebenen Verfahren rasterisiert, um ein rasterisiertes, mit Helligkeitswerten dicht besetztes 3D-Volumen 40 (erstes 3D-Volumen 40, Quell-3D-Volumen) zu erhalten.

Anhand der beiden rasterisierten 3D-Volumen 40 wird ein Wert der Verlustfunktion $L(S_\psi, T)$ und ein Gradient der Verlustfunktion $L(S_\psi, T)$ bezüglich der Vektoren (Parameter) der Transformation $\psi$ (Richtung des steilsten Abstiegs von $L$ am Ort $\psi$) berechnet.

Sodann wird die räumliche Transformation gemäß der Richtung des steilsten Abstiegs (Gradientenrichtung) variiert, und die Schritte des Rasterisierens von $S_\psi$ und des Bestimmens des Wertes und des Gradienten der Verlustfunktion $L(S_\psi, T)$ werden wiederholt, so lange, bis ein Minimum der Verlustfunktion erreicht worden ist.

In alternativen bevorzugten Ausgestaltungen wird in Schritt S30 jedoch kein numerisches Verfahren durchgeführt, sondern es wird ein trainiertes neuronales Netzwerk verwendet, das in Reaktion auf eine Eingabe der ersten Punktwolke $S$ und der zweiten Punktwolke $T$ die räumliche Transformation $\psi$ vorhersagt.

In klinischen Anwendungsfällen wie dem Beobachten einer atmenden Lunge oder eines schlagenden Herzens ist es kaum möglich, sinnvolle Ground-Truth-Daten für ein überwachtes Trainieren eines neuronalen Netzwerks zum Bestimmen der räumlichen Transformation $\psi$ bereitzustellen.

Die vorgeschlagene, auf der Rasterisierung der 3D-Volumina aus den Punktwolken $S$, $T$ basierende Verlustfunktion $L(S_\psi, T)$ eignet sich aufgrund ihrer Differenzierbarkeit zur Verwendung als Belohnungsfunktion im Rahmen von unüberwachtem Lernen, wobei die Belohnung umso geringer ausfällt, je größer der Wert der Verlustfunktion ist.

Ein geeignetes neuronales Netzwerk kann rein beispielhaft die folgende Struktur aufweisen: In einer ersten Schicht sind beispielsweise drei Eingabeneuronen bereitgestellt, über die nacheinander die x-, y- und z-Koordinaten eines jeweiligen Punkts einer jeweiligen der Punktwolken $S$, $T$, eingegeben werden. In mehreren weiteren Schichten werden die eingegebenen Punktwolken weiterverarbeitet, Beziehungen zwischen einzelnen Punkten einer Punktwolke ermittelt, und dergleichen, schließlich werden in einer bestimmten Tiefe des neuronalen Netzwerks beide Punktwolken miteinander in Verbindung gesetzt (konkateniert oder dergleichen). An einer Ausgangsschicht des neuronalen Netzwerks sind wiederum drei Ausgangsneuronen bereitgestellt, an denen nacheinander die Verschiebungsvektoren des Verschiebungsfelds $\psi$ ausgegeben werden.

Beispielsweise eignet sich PointPWC-Net, wie in Nichtpatentliteratur 5 offenbart, oder ein DGCNN, wie in Nichtpatentliteratur 6 offenbart, zur Verwendung als neuronales Netzwerk zum Vorhersagen der räumlichen Transformation $\psi$.

Zum Trainieren des neuronalen Netzwerks werden Trainingsdatensätze verwendet, die Paare aus Punktwolken $S$ und $T$ umfassen, die im klinischen Kontext auf die gleiche Weise wie in den Ausführungsbeispielen beschrieben gewonnen wurden und zueinander in Beziehung stehen. Mit anderen Worten handelt es sich bei einem Trainingsdatensatz beispielsweise um eine erste Punktwolke 32 und eine in demselben Sweep oder CT-Scan an demselben Körperabschnitt 5 des Patienten aufgenommene zweite Punktwolke 33. Bei einem weiteren Trainingsdatensatz handelt es sich beispielsweise um eine erste Punktwolke $S$ eines erstens CT-Scans mit einem CT-Scanner und eine zweite Punktwolke $T$ eines weiteren CT-Scans mit demselben CT-Scanner an demselben Körperabschnitt 5 desselben Patienten.

Für einen jeweiligen derartigen Trainingsdatensatz prognostiziert das neuronale Netzwerk ein Verschiebungsfeld $\psi$. Sodann werden auf die vorstehend beschriebene Weise die transformierte erste Punktwolke $S_\psi$ und die zweite Punktwolke $T$ des Trainingsdates rasterisiert, um jeweilige mit Helligkeitswerten dicht besetzte rasterisierte 3D-Volumina 40 zu erlangen. Anhand der rasterisierten 3D-Volumina 40 wird der Wert der Verlustfunktion $L(S_\psi, T)$ berechnet und ein von dem Wert der Verlustfunktion $L(S_\psi, T)$ abgeleiteter Wert wird als Belohnung bestimmt.

Sodann werden in einem bekannten Verfahren für unüberwachtes Lernen die Parameter der Neuronen des neuronalen Netzwerks anhand der bestimmten Belohnungen iterativ angepasst, bis sich eine Konfiguration ergibt, die für alle oder die Mehrzahl der Trainingsdatensätze hohe Belohnungen erzielen kann.

Ein numerisches Verfahren und ein Verfahren mit neuronalem Netzwerk zum Bestimmen der räumlichen Transformation $\psi$ wurden beschreiben. Die beiden Verfahren schließend einander nicht aus, sondern können kombiniert werden. Beispielsweise kann in Schritt S30 die dritte Einheit 13 auch zunächst eine Vorhersage für die räumliche Transformation $\psi$ von einem trainierten neuronalen Netzwerk erlangen und diese Vorhersage als anfängliche räumliche Transformation (Kandidaten-Transformation) $\psi$ in einem numerischen Verfahren nutzen und auf numerischem Wege die räumliche Transformation $\psi$ iterativ noch weiter optimieren, wie vorstehend beschrieben.

Regularisierung

Die beschriebenen Verfahren verbessern aufgrund der differenzierbaren Rasterisierung die Konvergenz und erlauben die Angabe eines wohldefinierten Gradienten der Verlustfunktion in Abhängigkeit der Parameter der zu bestimmenden Transformation, anhand dessen ein numerisches Verfahren durchgeführt werden kann, um die Verlustfunktion zu minimieren, oder anhand dessen ein neuronales Netzwerk in unüberwachtem Lernen trainiert werden kann.

Jedoch kann es bei bestimmten, sehr komplexen Trainingsdatensätzen bzw. sehr komplexen 2D-Einzelschnittbildern wünschenswert sein, zu vermeiden, dass das numerische Verfahren bzw. das unüberwachte Lernen bei einem lokalen statt bei dem globalen Minimum der Verlustfunktion konvergiert. Solche lokalen Minima können sich beispielsweise ergeben, wenn ein pulmonaler Gefäßbaum abgebildet wird, da kleine lokale Abschnitte des pulmonalen Gefäßbaums einander sehr ähnlich sein können, was zu Fehlzuordnungen führen kann, in denen solche lokalen Minima erreicht werden. Eine solche Fehlzuordnung wäre beispielsweise gegeben, wenn mehrere Gefäße parallel verlaufen und zwei unterschiedliche Gefäße der ersten Punktwolke fälschlich ein- und demselben Gefäß der zweiten Punktwolke zugeordnet werden.

Um die Konvergenz weiter zu verbessern und Konvergenz bei lokalen Minima und derartige Fehlzuordnungen zu vermeiden wird daher in einer bevorzugten Weiterbildung der zuvor beschriebenen Ausführungsbeispiele die Transformation $\psi$, die von dem neuronalen Netzwerk währen des Trainings vorhergesagt wird, und/oder die Kandidaten-Transformation $\psi$ in dem Gradientenverfahren mit einem gleichartigen Rasterisierungsverfahren wie das Verfahren, das für die Punktwolken beschrieben wurde, in ein mit Helligkeitswerten und Richtungswerten dicht besetztes, voxelisiertes, 3D-Volumen gerastert. Das heißt, jedes Voxel des 3D-Volumens speichert hierbei vier Werte: einen Helligkeitswert und drei Richtungswerte.

Für das Rasterisieren der Punktwolken wurde beispielhaft ein Verfahren angeben, bei dem eine Funktion $y(\boldsymbol{p})$, die 1 angibt, wenn sich an der Koordinate $\boldsymbol{p}$ ein Punkt befindet, und 0 andernfalls angibt, einer invertierten trilinearen Interpolation unterzogen wird.

Zum Rasterisieren der Transformation $\psi$, die als Vektorfeld aus Verschiebungsvektoren aufgefasst werden kann, kann eine Vektorfunktion $Y(\boldsymbol{p})$ einer invertierten Interpolation, wie vorstehend beschrieben, unterzogen werden, wobei ein erstes Element des Vektors Y(p) wiederum 1 angibt, wenn sich an der Koordinate $\boldsymbol{p}$ ein Ursprung eines Verschiebungsvektors der Punkt befindet, und andernfalls 0 angibt. Die anderen drei Elemente der Vektorfunktion $\boldsymbol{Y(p)}$ geben die Länge der Projektion des Verschiebungsvektors am Ursprung $\boldsymbol{p}$ auf die x-, y- und z-Achse (x-, y- und z-Komponente der Länge des Verschiebungsvektors) an.

In dem auf diese Weise erlangten 3D-Volumen ergibt sich der Helligkeitswert durch invertierte trilineare Interpolation des ersten Elements der Vektorfunktion $\boldsymbol{Y(p)}$, und die drei Richtungswerte ergeben sich durch invertierte trilineare Interpolation der übrigen drei Elemente der Vektorfunktion $\boldsymbol{Y(p)}$.

Die auf solche Weise erlangten drei Richtungswerte eines jeweiligen Voxels des rasterisierten, mit Helligkeitswerten und Richtungswerten dich besetzten 3D-Volumen werden anhand der Helligkeitswerte des jeweiligen Voxels normiert (durch diese dividiert).

Das solchermaßen erlangte, mit Helligkeitswerten und normierten Richtungswerten dicht besetzte 3D-Volumen wird sodann geglättet.

Beispielsweise könnte eine kardinale quadratische B-Spline-Glättung mit zwei iterativen Box-Filter-Schritten mit einer Kernelgröße von 5x5x5 erfolgen. Es besteht jedoch keine Einschränkung hierauf und es kann jedes bekannte Glättungsverfahren angewendet werden.

Anschließend wird das geglättete, mit Helligkeitswerten und normierten Richtungswerten dicht besetzte 3D-Volumen, beispielsweise durch trilineare Interpolation, d.h. durch Umkehrung des beschriebenen Rasterisierungsverfahrens, wieder in ein Vektorfeld interpoliert, das eine regularisierte räumliche Transformation $\psi^*$ darstellt.

Wenn in den für die Ausführungsbeispiele beschriebenen Verfahren gemäß der vorteilhaften Weiterbildung nicht die von einem neuronalen Netzwerk gelieferte oder durch ein numerisches Verfahren ermittelte Transformation $\psi$, sondern die wie vorstehend beschrieben durch Rasterisieren, Glätten und Rücküberführen in ein Vektorfeld regularisierte räumliche Transformation $\psi^*$ verwendet wird, und dementsprechend die Verlustfunktion anhand der gemäß der regularisierten räumlichen Transformation $\psi^*$ transformierten ersten Punktwolke $\boldsymbol{S_\psi}^* = \boldsymbol{S} + \psi^*$ und der zweiten Punktwolke (anhand der aus diesen Punktwolke rasterisierten 3D-Volzumen) bestimmt und ausgewertet wird, um die Belohnung für das Neuronale Netzwerk zu bestimmen oder den Gradienten für das gradientenbasierte numerische Verfahren zu bestimmen, kann Konvergenz auf lokalen Minima statt des globalen Minimums vorteilhafterweise minimiert oder verhindert werden.

Anschaulich kann man sich dies so erklären, dass die Regularisierung auf die beschriebene Weise die Verschiebungsvektoren der räumlichen Transformation $\psi^*$ "geradezieht", so dass beispielsweise parallel verlaufende Gefäße in der ersten Punktwolke vorzugsweise auf ebenfalls parallel verlaufende Gefäße in der zweiten Punktwolke abgebildet werden und eine Situation vermieden wird, in der zwei unterschiedliche Gefäße auf ein selbes Gefäß abgebildet werden.

Abwandlungen

Obwohl die vorliegende Erfindung anhand von Ausführungsbeispielen beschrieben wurde, ist sie vielfältig modifizierbar.

In Fig. 1 und Fig. 2 wurde die computerisierte Vorrichtung 1 und die bildgebende Vorrichtung 2 als zwei separate Vorrichtungen 1, 2 dargestellt, die über eine Kommunikationsstrecke 3 drahtgebunden oder drahtlos miteinander kommunikationsverbunden sind. Es ist jedoch auch denkbar, dass die computerisierte Vorrichtung 1 (die Einheiten 11-13) teilweise oder vollständig in die bildgebende Vorrichtung 2 integriert ist.

Als bildgebende Vorrichtung wurden eine Ultraschallsonde 2 und ein CT-Scanner 2 beschrieben, es sind jedoch auch andere bildgebende Vorrichtungen, wie beispielsweise Magnetresonanztomographen, Infrarotkameras, Tiefenkameras und dergleichen als bildgebende Vorrichtungen verwendet werden.

Im ersten Ausführungsbeispiel wurde beschrieben, dass die erste Einheit 11 die menschliche Bedienperson anweist, die 2D-Ultraschallsonde 20 entlang einer Trajektorie 4 zu führen. Denkbar ist jedoch auch, dass die menschliche Bedienperson an einer Benutzerschnittstelle, die auf der Anzeige 6 des Tablet-PCs 1 angezeigt wird, selbst auswählt, entlang welcher von mehreren standardisierten Trajektorien 4 sie die 2D-Ultraschallsonde zu führen gedenkt.

Die Verfahrensschritte S10-S30 sind in dem Ablaufdiagramm aus Fig. 2 als nachaufeinanderfolgende Verfahrensschritte dargestellt. Das heißt, es können zunächst alle Einzelschnittbilder 20 aufgenommen werden, sodann können alle Punktwolken 31-36 bestimmt, positioniert und orientiert werden, und sodann können die Punktwolken 31-36 aneinander registriert werden. Es besteht jedoch keine Einschränkung in dieser Hinsicht, und die Verfahrensschritte können auch weitestgehend parallelisiert werden. Insbesondere kann vorteilhafterweise eine jeweilige Punktwolke 31-36 bestimmt, positioniert und orientiert werden, sobald das zugehörige 2D-Einzelschnittbild 20 aufgenommen worden ist, und insbesondere im ersten Ausführungsbeispiel können jeweils zwei jeweils aufeinander folgende Punktwolken 32, 33 aneinander registriert werden, sobald diese Punktwolken 32, 33 verfügbar gemacht worden sind, während parallel bereits weitere 2D-Einzelschnittbilder 20 aufgenommen werden und weitere Punktwolken 31-36 bestimmt, positioniert und orientiert werden. So wird vorteilhafterweise ein Live-Feedback an die menschliche Bedienperson ermöglicht.

Die Erfindung wurde als ein Verfahren zum Registrieren mehrerer 2D-Einzelschnittbilder 20 in einem gemeinsamen 3D-Koordinatensystem beschrieben. Das vorgeschlagene Verfahren kann jedoch auch als ein Verfahren zum Registrieren mehrerer, aus den mehreren 2D-Einzelschnittbildern 20 abgeleiteter, dünn besetzter Punktwolken aneinander aufgefasst werden, oder auch als ein Verfahren zum Korrigieren der räumlichen Positionen und Orientierungen von 2D-Einzelschnittbildern 20 und/oder daraus abgeleiteter dünn besetzter Punktwolken und/oder als ein Verfahren zum Bestimmen und Visualisieren einer räumlichen Transformation, die eine erste aus gemessenen 2D-Einzelschnittbildern abgeleitete Punktwolke in eine zweite aus gemessenen 2D-Einzelschnittbildern abgeleitete Punktwolke überführt. Das vorgeschlagene Verfahren kann auch als ein Verfahren zum Verfolgen der Trajektorie eines mobilen 2D-Ultraschallsonde, ein Verfahren zum feedbackgeführten Führen einer mobilen 2D-Ultraschallsonde durch eine menschliche Bedienperson, oder als ein Verfahren zum Beobachten deformierbarer innerer Organe eines Patienten aufgefasst werden.

Vorgeschlagen wird außerdem ein Verfahren zum unüberwachten Trainieren eines neuronalen Netzwerks, um diesem die Fähigkeit zu verleihen, eine räumliche Transformation zwischen einer ersten dünn besetzten Punktwolke und einer zweiten dünn besetzten Punktwolke vorherzusagen, wobei das Verfahren wiederholtes Durchführen der folgenden Schritte für eine Vielzahl von ersten und zweiten dünn besetzten Punktwolken umfasst: Bereitstellen der jeweiligen ersten und der jeweiligen zweiten dünn besetzten Punktwolke als Trainings-Eingabedaten an das neuronale Netzwerk; Ermitteln einer prognostizierten Transformation als Ausgabe des neuronalen Netzwerks; Transformieren der ersten dünn besetzten Punktwolke gemäß der prognostizierten Transformation; Rasterisieren der transformierten ersten und der zweiten dünn besetzten Punktwolke, um ein mit Helligkeitswerten dicht besetztes erstes 3D-Volumen und ein mit Helligkeitswertes dicht besetztes zweites 3D-Volumen zu erlangen; Bestimmen des Wertes der Verlustfunktion für das erste und das zweite dicht besetzte zweite 3D-Volumen; und Anpassen von Parametern von Neuronen des neuronalen Netzwerks unter Verwendung des bestimmten Werts der Verlustfunktion als Belohnung oder Bestrafung im Rahmen eines Verfahrens zum unüberwachten Trainieren des neuronalen Netzwerks.

Insbesondere wird eine jeweilige der zum unüberwachten Trainieren verwendeten Punktwolken erlangt durch: Aufnahmen einer oder mehrere Bildsequenzen aus jeweils mehreren 2D-Einzelschnittbildern eines Körperabschnitts eines Patienten mit einer bildgebenden Vorrichtung an unterschiedlichen Positionen entlang des Körperabschnitts; und für jedes der mehreren 2D-Einzelschnittbilder: Bestimmen einer Anzahl 2D-Konturen jeweiliger anatomischer und oder geometrischer Strukturen in dem 2D-Einzelschnittbild, Bestimmen einer dünn besetzten Punktwolke mit mehreren Oberflächenpunkten auf jeder der Anzahl 2D-Konturen, und Positionieren und Orientieren der dünn besetzten Punktwolke in dem gemeinsamen 3D-koordinatensystem anhand einer bekannten, gemessenen oder geschätzten Position und Orientierung des 2D-Einzelschnittbilds.

Vorteile

Insbesondere können die folgenden Vorteile gemäß Ausführungsbeispielen erzielt werden: Gemäß den Ausführungsbeispielen werden dünn besetzten Punktwolken aus jeweils einem oder mehreren 2D-Einzelschnittbildern extrahiert. Die extrahierten Punktwolken können hochgenau und sehr schnell in räumliche Korrespondenz gebracht werden, um Messung von relativen Bewegungen der Anatomie und/oder der Ultraschallsonde zu ermöglichen. Dank der vorgeschlagenen Verlustfunktion auf Basis der vorgeschlagenen differenzierbaren und sehr effizienten Rasterisierung ist hierbei ein Feedback an eine menschliche Bedienperson in Form von einer Visualisierung, einer Anweisung zum Korrigieren einer Trajektorie und dergleichen in Sub-Sekunden in Echtzeit möglich. Hierbei ist es aufgrund der hohen Effizienz vorteilhafterweise möglich, das vorgeschlagene Verfahren auf einem Mobilgerät mit begrenzter Rechenleistung, wie einem Smartphone oder einem Tablet-PC durchzuführen. Zudem können nicht nur aufeinanderfolgende 2D-Einzelschnittbilder einer einzelnen Bildsequenz räumlich in Korrespondenz gebracht werden, sondern es ist auch möglich, Informationen aus mehreren Bildsequenzen, zu sammeln und eine Punktwolke, die eine gesamte Bildsequenz repräsentiert, mit einer Punktwolke, die eine weitere gesamte Bildsequenz repräsentiert, räumlich in Korrespondenz zu bringen, so dass zeitliche Veränderungen der inneren Organe visualisiert werden können. Das heißt, das Verfahren ist nicht auf knöcherne oder rigide Strukturen beschränkt, sondern eignet sich auch zum Untersuchen und Visualisieren deformierbarer Objekte, wie einer atmenden Lunge oder eines schlagenden Herzens.

BEZUGSZEICHENLISTE

| | |
|---|---|
| 1 | computerisierte Vorrichtung, Tablet-PC |
| 2 | bildgebende Vorrichtung, 2D-Ultraschallsonde, CT-Scanner |
| 3 | Übertragungsstrecke |
| 4 | Trajektorie |
| 5 | Körperabschnitt eines Patienten |
| 6 | Anzeige |
| 7 | Tisch |
| 9 | Röntgenstrahlung |
| 11 | erste Einheit |
| 12 | zweite Einheit |
| 13 | dritte Einheit |
| 20 | 2D-Einzelschnittbild |
| 21-24 | Konturen anatomischer oder geometrischer Strukturen |
| 31-36 | dünn besetzte Punktwolken |
| 40 | dicht besetztes 3D-Volumen |
| 81 | Röntgensender |
| 82 | Röntgen-Detektorarray |
| 400 | Voxel |
| S10-S30 | Verfahrensschritte |
| $L$ | Verlustfunktion |
| $S$ | erste Punktwolke |
| $S_\psi$ | transformierte erste Punktwolke |
| $S_\psi$ | gemäß regularisierter räumlicher Transformation transformierte erste Punktwolke |
| $T$ | zweite Punktwolke |
| $\psi$ | räumliche Transformation |
| $\psi^*$ | regularisierte räumliche Transformation |

**Patentansprüche**

1. Verfahren zum Registrieren mehrerer medizinischer, zweidimensionaler, 2D, Einzelschnittbilder (20) in einem gemeinsamen dreidimensionalen, 3D, Koordinatensystem, umfassend:

   a) Aufnehmen (S1) einer oder mehrerer Bildsequenzen aus jeweils mehreren 2D-Einzelschnittbildern (20) eines Körperabschnitts (5) eines Patienten mit einer bildgebenden Vorrichtung (2) an unterschiedlichen Positionen entlang des Körperabschnitts (6);
   b) für jedes der mehreren 2D-Einzelschnittbilder (20):

   b.1) Bestimmen (S21) einer Anzahl 2D-Konturen (21-24) jeweiliger anatomischer und/oder geometrischer Strukturen in dem 2D-Einzelschnittbild (20),
   b.2) Bestimmen (S22) einer dünn besetzten Punktwolke (31-36) mit mehreren Oberflächenpunkten auf jeder der Anzahl 2D-Konturen, und

b.3) Positionieren und Orientieren (S23) der dünn besetzten Punktwolke (31-33) in dem gemeinsamen 3D-Koordinatensystem anhand einer bekannten, gemessenen oder geschätzten Position und Orientierung des 2D-Einzelschnittbilds (20); und

c) Registrieren (S30) einer aus einer oder mehreren der dünn besetzten Punktwolken (31-36) gebildeten ersten Punktwolke ($S$) an einer aus einer oder mehreren der dünn besetzten Punktwolken (31-36) gebildeten zweiten Punktwolke ($T$) durch Bestimmen einer räumlichen Transformation ($\psi$), welche die erste Punktwolke ($S$) dergestalt in die zweite Punktwolke ($T$) überführt, dass eine Fehlanpassung zwischen der gemäß der räumlichen Transformation ($\psi$) transformierten ersten Punktwolke ($S_\psi$) und der zweiten Punktwolke ($T$) möglichst gering ist, durch Minimieren einer Verlustfunktion (L), die eine Abweichung zwischen zwei rasterisierten, mit Helligkeitswerten dicht besetzten 3D-Volumina (40) angibt, welche durch Rasterisieren der gemäß der räumlichen Transformation ($\psi$) transformierten ersten Punktwolke ($S_\psi$) und Rasterisieren der zweiten Punktwolke ($T$) erlangt werden.

2. Verfahren nach Anspruch 1,
wobei in Schritt c) die räumliche Transformation ($\psi$) in einem numerischen Verfahren bestimmt wird, bei dem die räumliche Transformation ($\psi$) iterativ variiert wird, um einen von der räumlichen Transformation ($\psi$) abhängigen Wert der Verlustfunktion ($L$) zu verringern oder zu minimieren.

3. Verfahren nach Anspruch 1 oder 2,
wobei in Schritt c) die räumliche Transformation ($\psi$) als Ausgabe eines trainierten neuronalen Netzwerks ermittelt wird, in das die erste und die zweite Punktwolke ($S$, $T$) eingegeben werden, wobei das neuronale Netzwerk durch unüberwachtes Lernen mit Trainings-Eingangsdatensätzen aus ersten und zweiten dünn besetzten Punktwolken ($S$, $T$) unter Verwendung der Verlustfunktion (L) oder einer von der Verlustfunktion abhängigen Funktion als Belohnungsfunktion trainiert ist.

4. Verfahren nach einem der Ansprüche 1 bis 3,
wobei das Rasterisieren dergestalt erfolgt, dass das durch Rasterisieren der jeweiligen Punktwolke ($S_\psi$, $T$) erlangte, mit Helligkeitswerten dicht besetzte 3D-Volumen (40) nach Ortskoordinaten der Oberflächenpunkte der jeweiligen Punktwolke ($S_\psi$, $T$) differenzierbar ist, so dass die anhand der mit Helligkeitswerten dicht besetzten 3D-Volumina (40) definierte Verlustfunktion (L) nach Parametern der räumlichen Transformation ($\psi$) differenzierbar ist.

5. Verfahren nach einem der Ansprüche 1 bis 4,
wobei das Rasterisieren durch invertierte trilineare Interpolation erfolgt.

6. Verfahren nach einem der Ansprüche 1 bis 5,
wobei die Verlustfunktion (L) eine monoton ansteigende Abstandsfunktion ist, die als Summe eines von Abständen zwischen den Helligkeitswerten korrespondierender Voxel (400) der beiden mit Helligkeitswerten dicht besetzten 3D-Volumina (40) abhängigen Terms definiert ist.

7. Verfahren nach einem der Ansprüche 1 bis 6,

wobei die bildgebende Vorrichtung (2) für die Aufnahme einer Bildsequenz von einer Bedienperson entlang einer vorgegebenen Trajektorie (4) an dem Körperabschnitt (5) entlang geführt wird, und
in Schritt c) jeweils in der Bildsequenz aufeinanderfolgende dünn besetzte Punktwolken (31-33) aneinander registriert werden und wenigstens die Positionen und Orientierungen der dünn besetzten Punktwolken (31-33) gemäß der beim Registrieren bestimmten räumlichen Transformationen ($\psi$) korrigiert werden.

8. Verfahren nach Anspruch 7, ferner umfassend:

d) Rasterisieren der mehreren aneinander registrierten, dünn besetzten 3D-Punktwolken (31-33), um ein mit Helligkeitswerten dicht besetztes, fusioniertes 3D-Gesamtvolumen zu erhalten; und
e) Ausgeben des 3D-Gesamtvolumens und/oder Visualisieren des 3D-Gesamtvolumens auf einer Anzeigevorrichtung (6).

9. Verfahren nach Anspruch 7 oder 8, ferner umfassend:

f) Rekonstruieren einer tatsächlich mit der bildgebenden Vorrichtung (2) vollführten Trajektorie anhand der in Schritt c) bestimmten korrigierten Positionen und Orientierungen der dünn besetzten Punktwolken (31-33);

g) Vergleichen der vorgegebenen Trajektorie (4) mit der in Schritt f) rekonstruierten, tatsächlich vollführten Trajektorie; und

h) Ausgeben eines Signals, falls bestimmt wird, dass die rekonstruierte, tatsächliche Trajektorie um mehr als einen vorbestimmten Schwellwert von der vorgegebenen Trajektorie (4) der bildgebenden Vorrichtung (2) abweicht.

10. Verfahren nach einem der Ansprüche 1 bis 8, wobei

in Schritt a) mehrere Bildsequenzen aufgenommen werden, und

in Schritt c) jeweils mehrere dünn besetzte Punktwolken (31-33) einer der Bildsequenzen an korrespondierenden mehreren dünn besetzten Punktwolken (34-36) einer weiteren der Bildsequenzen registriert werden.

11. Verfahren nach Anspruch 10, ferner umfassend:

i) Ausgeben der in Schritt c) beim Registrieren der dünn besetzten Punktwolken (31-33, 34-36) der unterschiedlichen Bildsequenzen bestimmten Transformation ($\psi$), oder Visualisieren der in Schritt c) beim Registrieren der dünn besetzten Punktwolken (31-33, 34-36) der unterschiedlichen Bildsequenzen bestimmten Transformation ($\psi$) auf einer Anzeigevorrichtung (6), um eine Bewegung eines inneren Organs des Patienten zu visualisieren.

12. Verfahren nach einem der Ansprüche 1 bis 11,

wobei das Verfahren in Echtzeit durchgeführt wird, während die ein oder mehreren Bildsequenzen aufgenommen werden.

13. Verfahren nach einem der Ansprüche 1 bis 12,

wobei die bildgebende Vorrichtung (2) eine mobile Ultraschallsonde ist.

14. Verfahren nach einem der Ansprüche 1 bis 13,

wobei die räumliche Transformation ($\psi$) rasterisiert wird, um ein mit Helligkeitswerten und Richtungswerten dicht besetztes 3D-Volumen zu erlangen,

das mit Helligkeitswerten und normierten Richtungswerten dicht besetzte 3D-Volumen einer Glättung unterzogen wird,

das geglättete, mit Helligkeitswerten und normierten Richtungswerten dicht besetzte 3D-Volumen interpoliert wird, um eine regularisierte räumliche Transformation ($\psi^*$) zu erlangen, und

das Registrieren (S30) dergestalt erfolgt, dass eine Fehlanpassung zwischen der gemäß der regularisierten räumlichen Transformation ($\psi^*$) transformierten ersten Punktwolke ($S_{\psi^*}$) und der zweiten Punktwolke ($T$) möglichst gering ist, durch Minimieren einer Verlustfunktion ($L^*$), die eine Abweichung zwischen zwei rasterisierten, mit Helligkeitswerten dicht besetzten 3D-Volumina (40) angibt, welche durch Rasterisieren der gemäß der regularisierten räumlichen Transformation ($\psi^*$) transformierten ersten Punktwolke ($S_{\psi^*}$) und Rasterisieren der zweiten Punktwolke ($T$) erlangt werden.

15. Computerprogrammprodukt, welches Befehle umfasst, die bei der Ausführung des Programms durch einen mit einer bildgebenden Vorrichtung kommunikationsverbundenen oder in diese integrierten Computer den Computer dazu veranlassen, das vorstehende Verfahren nach einem der vorhergehenden Ansprüche auszuführen.

16. Vorrichtung (1) zum Registrieren mehrerer 2D-Einzelbilder (20) eines Patienten in einem gemeinsamen 3D-Koordinatensystem, umfassend:

a) eine erste Einheit (11), die dazu eingerichtet ist, von einer bildgebenden Vorrichtung (2) eine oder mehrere Bildsequenzen aus jeweils mehreren, mit der bildgebenden Vorrichtung (2) an unterschiedlichen Positionen entlang eines Körperabschnitts (5) eines Patienten aufgenommenen zweidimensionalen Einzelschnittbildern (20) zu erlangen;

b) eine zweite Einheit (12), die dazu eingerichtet ist, die folgenden Schritte für jedes der mehreren 2D-Einzelschnittbilder (20) durchzuführen:

b.1) Bestimmen einer Anzahl 2D-Konturen jeweiliger anatomischer und/oder geometrischer Strukturen in dem 2D-Einzelschnittbild (20),

b.2) Bestimmen einer dünn besetzten Punktwolke (31-36) mit mehreren Oberflächenpunkten auf jeder der 2D-Konturen,

b.3) Positionieren und Orientieren der dünn besetzten Punktwolke (31-36) in dem gemeinsamen 3D-Koordinatensystem anhand einer bekannten, gemessenen oder geschätzten Position und Orientierung des 2D-Einzelschnittbilds (20);

c) eine dritte Einheit (S13), die eingerichtet ist zum Registrieren einer aus einer oder mehreren der dünn besetzten Punktwolken (31-36) gebildeten ersten Punktwolke ($S$) an einer aus einer oder mehreren der dünn besetzten Punktwolken (31-36) gebildeten zweiten Punktwolke ($T$) durch Bestimmen einer räumlichen Transformation($\psi$), welche die erste Punktwolke ($S$) dergestalt in die zweite Punktwolke ($T$) überführt, dass eine Fehlanpassung zwischen der gemäß der räumlichen Transformation ($\psi$) transformierten ersten Punktwolke ($S_{\psi}$) und der zweiten Punktwolke ($T$) möglichst gering ist, durch Minimieren einer Verlustfunktion ($L$), die eine Abweichung zwischen zwei rasterisierten, mit Helligkeitswerten dicht besetzten 3D-Voluma (40) angibt, welche durch Rasterisieren der gemäß der räumlichen Transformation transformierten ersten Punktwolke ($S_{\psi}$) und Rasterisieren der zweiten Punktwolke ($T$) erlangt werden.

17. System (100), umfassend die Vorrichtung (1) nach Anspruch 16 und die bildgebende Vorrichtung (2).

**FIG. 1**

**FIG. 2**

FIG. 3

**FIG. 4**

**FIG. 5**

**FIG. 6**

**FIG. 7**

**FIG. 8**

**FIG. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 11580328 B1
- WO 2020216752 A1
- DE 102020119954 A1
- EP 3522789 B1
- US 20120143049 A1

**In der Beschreibung aufgeführte Nicht-Patentliteratur**

- **MESCHEDER et al.** Occupancy networks: Learning 3d reconstruction in function space. *Proceedings of the IEEE/CVF conference on computer vision and pattern recognition*, 2019, 4460-4470
- **BAUM et al.** Real- time multimodal image registration with partial intraoperative point-set data.. *Medical image analysis*, 2021, vol. 74, 102231
- **SHEN et al.** Accurate point cloud registration with robust optimal transport.. *Advances in Neural Information Processing Systems*, 2021, vol. 34, 5373-5389
- Pointpwc-net: Cost volume on point clouds for (self-) supervised scene flow estimation. **WENXUAN WU et al.** Computer Vision-ECCV 2020: 16th European Conference, Glasgow, UK. Springer, 23 August 2020, vol. 16, 88-107
- **YUE WANG et al.** Dynamic graph cnn for learning on point clouds. *Acm Transactions ON Graphics (tog)*, 2019, vol. 38 (5), 1-12
- Fast 3D Registration with Accurate Optimisation and Little Learning for Learn2Reg 2021.. **SIEBERT, H.** ; **HANSEN, L** ; **HEINRICH, M.P.** Biomedical Image Registration, Domain Generalisation and Out-of-Distribution Analysis. MICCAI 2021. Lecture Notes in Computer Science. Springer, 2022, vol. 13166
- Registration of images to unorganized 3D point clouds using contour cues. **PUJOL-MIRO, ALBA** ; **RUIZ-HIDALGO, JAVIR;** ; **CASSAS, JOSEP R.** 25th European Signal Processing Conference: EUSIPCO. IEEE, 2017, 81-85
- **NICHTPATENTLITERATUR 9, BOJANIĆ, DAVI et al.** *Challenging the universal representation of deep models for 3D point cloud registration.*, 29 November 2022, 1-15